Europäisches Patentamt

European Patent Office

Office européen des brevets

(19)

(11) Veröffentlichungsnummer : **0 046 151
B1**

(12) **EUROPÄISCHE PATENTSCHRIFT**

(45) Veröffentlichungstag der Patentschrift :
21.11.85

(21) Anmeldenummer : 80104916.4

(22) Anmeldetag : 19.08.80

(51) Int. Cl.⁴ : **G 05 D   1/08, B 64 G   1/26,
G 05 B 17/02**

(54) Vorrichtung zur Lagestabilisierung von elastischen Fahrzeugen.

(43) Veröffentlichungstag der Anmeldung :
24.02.82 Patentblatt 82/08

(45) Bekanntmachung des Hinweises auf die Patenterteilung : 21.11.85 Patentblatt 85/47

(84) Benannte Vertragsstaaten :
DE FR GB IT SE

(56) Entgegenhaltungen :
US-A- 3 624 367
PROCEEDINGS OF THE IFAC, Proc. 6: 6th World
Congres, Boston, August 24-30, 1975, PITTSBURGH
(US), Instr. Soc. of America 1975, C.J. HARRIS:
"Adaptive Control of non linear flexible spacecraft",
Seite 35.2,1 bis Seite 35.2,8
JOURNAL OF GUIDANCE AND CONTROL, Band 2, Nr.
5, September-Oktober 1979, NEW YORK (US), L.
MEIROVITCH: "Distributed Control of Spinning Flexible Spacecraft", Seiten 407-415
JOURNAL OF GUIDANCE AND CONTROL, Band 3, Nr.
2, März-April 1980, NEW YORK (US), L. MEIRO-
VITSCH: "Model-Space Control of Distributed Gyroscopic Systems"

(73) Patentinhaber : Messerschmitt-Bölkow-Blohm Gesellschaft mit beschränkter Haftung
Robert-Koch-Strasse
D-8012 Ottobrunn (DE)

(72) Erfinder : Bittner, Helmut, Dipl.-Ing.
Zirlerstrasse 4
D-8000 München 70 (DE)
Erfinder : Gottzein, Eveline, Dipl.-Math-
Waldstrasse 1
D-8011 Oberpframmern (DE)
Erfinder : Surauer, Michael, Dipl.-Ing.
Lindenstrasse 11
D-8224 Chieming (DE)

Jouve, 18, rue St-Denis, 75001 Paris, France

## 0 046 151

**Beschreibung**

Die Erfindung bezieht sich auf eine Vorrichtung zur Lagestabilisierung eines elastischen Fahrzeugs nach dem Oberbegriff des Patentanspruchs 1 oder 2.

Zur Lagestabilisierung von Raumfahrzeugen ist es bekannt, Abweichungen von der Sollage durch Düsenimpulse zu korrigieren, sobald ein vorgegebener zulässiger Wert des Regelfehlers überschritten wird, siehe US-A-39 84 071.

Abweichungen von der Sollage werden bei Raumfahrzeugen, die sich in Erdumlaufbahnen bewegen, meistens durch Infrarot-Horizonsensoren (IRS), Radio-Frequenzsensoren bzw. Sonnensensoren gemessen. In speziellen Fällen, wie beispielsweise bei wissenschaftlichen oder Erderkundungssatelliten werden auch Kreiselgeräte und Sternensensoren eingesetzt.

Zur Umsetzung der weitgehend kontinuierlichen Regelabweichung in entsprechende impulsförmige Signale für die Momente um die Fahrzeugachsen werden üblicherweise sogenannte « Pseudo-rate »- oder « Puls-Weiten-Puls-Frequenz » (PWPF)-Modulatoren verwendet. Die zugehörigen Reglernetzwerke bestehen dann aus Verzögerungsgliedern zur Unterdrückung des Sensorrauschens im Falle des Pseudo-rate, bzw. aus Proportional-Differential (PD-) Gliedern mit Filtern im Falle des PWPF-Modulators, siehe z. B. J.E. Vaeth : « Compatibility of Impulse Modulation Techniques with Attitude Sensor Noise and Spacecraft Maneuvering » IEEE Transactions on Automatic Control, Jan. 1965, Seite 67 ff.

Beide Reglerkonfigurationen eignen sich gut für die Stabilisierung von Fahrzeugen, insbesondere Satelliten, deren konstruktiver Aufbau keine nennenswerten strukturelastischen Verformungen wie Biege- und Torsionsschwingungen zuläßt.

Bei der zunehmenden räumlichen Ausdehnung solcher Fahrzeuge, ihrem hohen Schlankheitsgrad in bestimmten Achsenrichtungen sowie ihrer leichten Bauweise sind solche Strukturschwingungen, die naturgemäß auch noch sehr schwache Eigendämpfungen aufweisen, unvermeidbar und für die Bewegungsdynamik von ausschlaggebender Bedeutung. Bei dreiachsenstabilisierten Kommunikationssatelliten zum Beispiel wird die elektrische Energie für die Bordgeräte und die nachrichtentechnische Nutzlast zumeist durch zwei einander gegenüberliegende ausfaltbare Solargeneratoren erzeugt, die üblicherweise 1 bis 2 m breit, aber im ausgefalteten Zustand 5 bis 20 und mehr Meter lang sein können, bei einer Dicke von nur wenigen Zentimetern. Die Frequenzen der untersten Biege- und Torsions-Eigenformen solcher Strukturen liegen in der Größenordnung von 0,1 bis 2 Hz, d. h. in einem Frequenzbereich, in dem bei bestimmten Störmomentenverhältnissen auch die oben genannten Modulatoren arbeiten, was zur Anregung der Strukturschwingungen führt. Die Frequenzen der reinen Starrkörperbewegung sind im allgemeinen etwa eine Größenordnung niedriger als die der Strukturschwingungen.

Mit den Regelungssystemen herkömmlicher Bauart ist es nun sehr schwierig und bei zunehmender Größe der Raumfahrzeuge sogar unmöglich, die sich teilweise widersprechenden Anforderungen nach Ausrichtgenauigkeit, zufriedenstellender Starrkörperdynamik und gleichzeitiger aktiver Strukturschwingungsdämpfung zu erfüllen. Die einstellbaren Parameter des Regelungssystems sind durch die Anforderungen oder physikalischen Eigenschaften der Komponenten zum Teil von vornherein festgelegt oder in ihrer Wahl stark eingeschränkt wie z. B. :

Die Reglerverstärkung durch die geforderte Lagegenauigkeit bei gegebenem maximalem Störmoment

Die Größe des minimalen Düsenimpulses (Schub mal Düsenöffnungszeit) durch die Verzögerung der Ventile und/oder die Physik des Verbrennungsvorganges

Die maximale Zahl der Düsenimpulse über die Lebensdauer (von z. B. 7 bis 10 Jahren) durch Zuverlässigkeitsanforderungen (Abnutzung, Alterung)

Die Verhältnisse der Reglerzeitkonstanten (Vorhalt, Filterzeitkonstanten) durch das Signal/Rauschverhältnis der Sensoren.

War es bislang zum Teil noch möglich, für Raumfahrzeuge vorwiegend starrer Struktur oder mit nur einer dominanten Biegeschwingungsform einen brauchbaren Kompromiß bei der Wahl der Einstellparameter der Regelungssysteme der oben genannten Konfiguration zu finden — siehe z. B. : AIAA paper No. 76-266 « Attitude Stability of Flexible Spacecrafts which use dual Time Constant Feedback Network Pseudorate Control », 6th Communications Satellite Systems Conference, Montreal, April 5-8, 1976 — so ist dies in zunehmendem Maße dadurch unmöglich, daß :

Die Genauigkeitsanforderungen und damit die Reglerverstärkung weiter erhöht werden müssen

Aufgrund der immer größer und damit « weicher » werdenden Strukturen mehrere Biegeschwingungsformen verschiedener Eigenfrequenzen pro Fahrzeugachse berücksichtigt und stabilisiert werden müssen.

Zur gemeinsamen Stabilisierung von Lage und Schwingung sind nun Regelsysteme der beanspruchten Art bekannt (« Proceeding of the IFAC » August 1975 und « Journal of Guidance and Control », 1979), bei denen der gesamte Zustandsvektor, also sowohl das Starrkörpermodell als auch das Elastizitätsmodell des elastischen Fahrzeugs im Beobachterteil realisiert wird, d. h., daß das Modell und damit auch der Beobachterteil für jede zusätzlich in Betracht gezogene Strukturschwingungsform um zwei Ordnungen erhöht werden muß. Die Einbeziehung der Strukturelastizität in das Modell im Beobachterteil erfordert somit einen ganz erheblichen elektronischen Regelaufwand, selbst wenn nur wenige Eigenschwingungsformen berücksichtigt werden. Vor allem aber sind genaue Vorhersagen über die tatsächlichen Eigenschwingungsformen nicht möglich, so daß diese bekannten Regelsysteme in ihren praktischen Nutzen sehr begrenzt sind, da bereits geringe Abweichungen der tatsächlichen von den im Beobachtermodell enthaltenen Eigenschwingungsformen zu Instabilitäten oder zumindest nichtlinearen Schwingungen, so genannten Grenzzyklen führen, die eine Betätigung der Stellgliedanordnung im Rythmus der Eigenfrequenzen der Strukturschwingungen zur Folge haben und einen hohen Energieverbrauch und missionsgefährdende Strukturbelastungen verursachen können.

Die Aufgabe der vorliegenden Erfindung besteht nun darin, Vorrichtungen zur Stabilisierung von elastischen Fahrzeugen der beanspruchten Art so auszubilden, daß sie trotz hoher Regelgenauigkeit einen geringen Realisierungsaufwand erfordern, sich durch große Unempfindlichkeit gegen Änderungen der systemspezifischen Parameter, insbesondere der Elastizitätsparameter, auszeichnen, einen geringen Stellenergieverbrauch aufweisen und die dynamischen Probleme elastischer Fahrzeuge bei Verwendung diskontinuierlich arbeitender Stellglieder beherrschen.

Diese Aufgabe wird erfindungsgemäß durch die im Anspruch 1 bzw. 2 gekennzeichnete Vorrichtung gelöst. Weitere vorteilhafte Ausgestaltungen der Erfindung sind in den Unteransprüchen angegeben.

Die erfindungsgemäßen Vorrichtungen sind überall dort vorteilhaft einsetzbar, wo die genannten Probleme von Resonanzverhalten der Regelstrecke bei bestimmten Eigenfrequenzen und diskontinuierlich arbeitenden Stelleingriffen auftreten. Dies ist z. B. der Fall bei schlanken, d. h. biegefähigen Raketen und Flugkörpern in der Atmosphäre mit diskreter Ansteuerung der Ruder sowie bei Trägerfahrzeugen, vor allem deren Oberstufen, und magnetisch getragenen und geführten Schienenfahrzeugen elastischer Bauart bzw. mit elastischer Aufhängung der Einzelmagnete als Trag- und Führungsglieder, die sich auf elastisch verformbaren Führungstrassen (Schienen) bewegen und deren Stromstellglieder diskontinuierlich arbeiten.

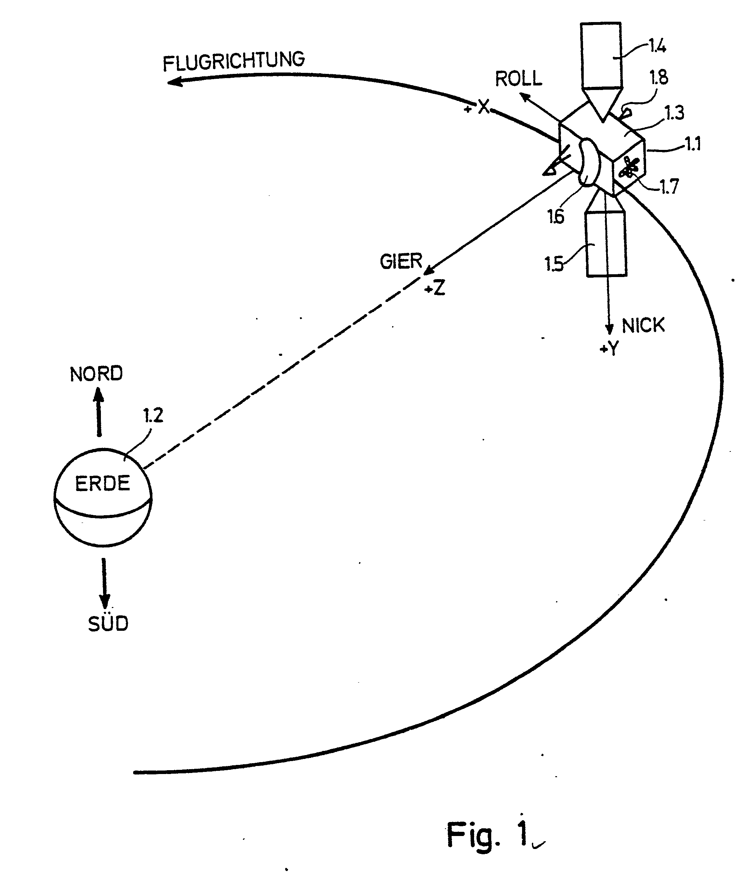

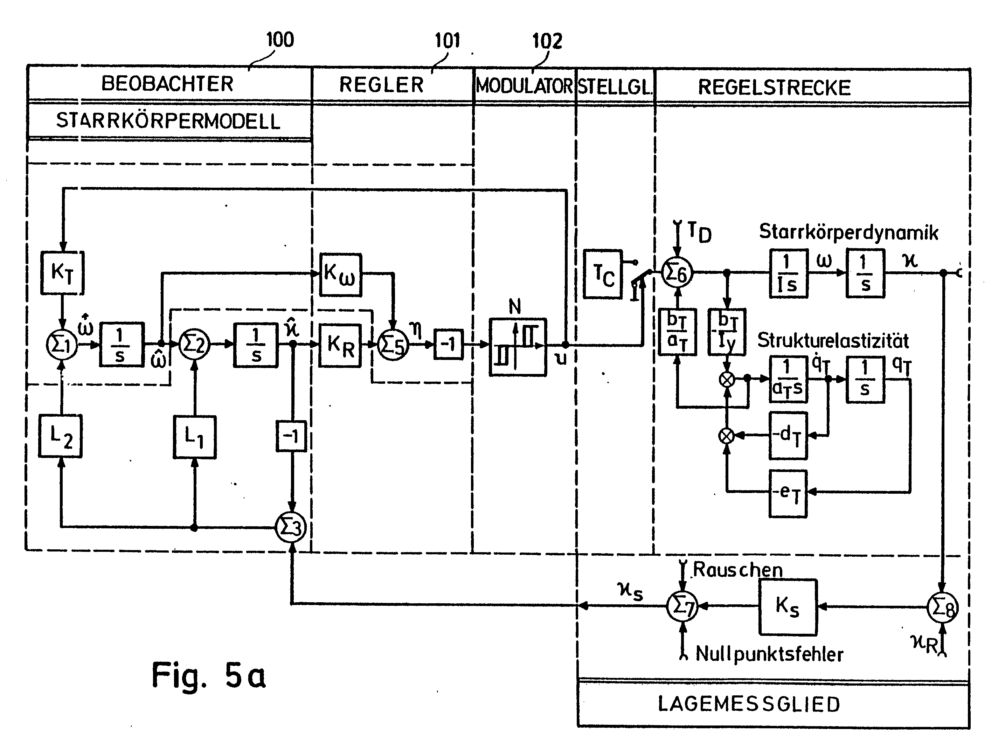

Statt Reaktionsdüsen bei Raumfahrzeugen und Satelliten können z. B. auch einfach oder doppelt kardanisch gelagerte Drallräder mit Schrittverstellung der Rahmen oder sogenannte « control moment gyros » und dergleichen verwendet werden. Die Erfindung wird nunmehr, ausgehend vom Stand der Technik, (Fig. 1 bis 4b) anhand mehrerer Ausführungsbeispiele (Fig. 5a bis 8) näher erläutert. Es zeigen :

Figur 1  einen geostationäres Raumfahrzeug auf seiner Umlaufbahn

Figuren 2a, 2b  Regelkreise nach dem Stand der Technik

Figur 2c  die Zusammenführung der Kreise aus Fig. 2a, 2b

Figur 3  ein Blockschaltbild eines herkömmlichen Starrkörper-Regelsystems mit Beobachter, Zustandsregler, PWPF-Modulator

Figur 4a  ein übliches dynamisches Modell eines elastischen Fahrzeugs

Figur 4b  ein übliches dynamisches Modell der gekoppelten Roll/Gierbewegung eines elastischen Raumfahrzeugs

Figur 5a  eine erste Regelvorrichtung nach der Erfindung

Figur 5b  eine Regelvorrichtung mit äquivalenten Netzwerken zum Beobachter/Zustandsregler nach Fig. 5a

Figur 5c  eine Regelvorrichtung mit erweitertem Beobachter/Zustandsregler zur Störgrößenschätzung und Kompensation

Figur 6  eine weitere Regelvorrichtung nach der Erfindung

Figur 7  ein Funktionsschaltbild eines adaptiven PWPF-Modulators

Figur 8  eine Regelvorrichtung mit Beobachter und mehrfach adaptivem Regler.

Fig. 1 zeigt stark vereinfacht die typische geometrische Konfiguration eines geostationären Nachrichtensatelliten 1.1 auf seiner Umlaufbahn um die Erde 1.2. Das Raumfahrzeug 1.1 besteht aus einem würfelförmigen Zentralkörper 1.3, in dem großflächige, biegeelastische Solargeneratoren 1.4 und 1.5 drehbar gelagert sind und der eine oder mehrere auf die Erde 1.2 ausgerichtete Antennen 1.6 trägt, deren Strahlungsrichtung mit Hilfe des Regelungssystems des Raumfahrzeugs 1.1 innerhalb vorgegebener, enger Grenzen beibehalten werden soll. Dem Raumfahrzeug 1.1 ist ein Achsensystem x (Rollachse), y (Nickachse), z (Gierachse) so zugeordnet, daß bei idealer Funktion des Regelungssystems die Rollachse in die augenblickliche Flugrichtung, die Gierachse auf den Erdmittelpunkt und die Nickachse in Richtung der Bahnnormalen zeigt. Zur Erzeugung von Drehmomenten um diese Achsen sowie zur Erzeugung von Kräften entlang der Roll- und Nickachse dienen auf verschiedenen Seiten angeordnete Reaktionsdüsen 1.7 und 1.8, die nur schematisch und soweit in dieser Darstellung sichtbar gezeigt sind.

Im Normalbetrieb des Raumfahrzeugs 1.1 treten nun vor allem durch Solardruck, Restmagnetismus des Raumfahrzeugs 1.1 in Wechselwirkung mit dem Erdmagnetfeld, sowie Inhomogenitäten des Gravitionsfeldes der Erde 1.2 Störkräfte und Störmomente auf, die das Raumfahrzeug 1.1 von seiner Sollposition auf der Umlaufbahn und die Achsenrichtungen von ihrer Sollage abbringen, was durch Eingreifen des Regelungssystems verhindert werden muß. Die Wiederherstellung der Sollposition erfolgt durch sogenannte Bahnkorrekturmanöver, d. h. Betätigung der in x- oder y-Richtung zeigenden Reaktionsdüsen 1.7, 1.8, deren Schub wegen Abweichungen des Raumfahrzeug-Schwerpunktes von seiner Ideallage gleichzeitig große Störmomente um die Raumfahrzeugachsen zur Folge hat. Diese Störmomente werden durch kurzzeitige Düsenimpulse aus den drehmomentenerzeugenden Reaktionsdüsen 1.7, 1.8 aufgefangen, was zur Anregung von Strukturschwingungen führt. Pulsdauer und

3

Pulsfolgefrequenz richten sich dabei nach der Größe der auftretenden Störmomente, Schubniveau, Hebelarm und Auslegungsparametern der verwendeten Pulsmodulatoren, und bei bestimmten, sogenannten kritischen Störmomenten fällt die Pulsfolgefrequenz mit den Eigenfrequenzen der elastischen Strukturschwingungen oder Subharmonischen derselben zusammen, was besonders schwer zu beherrschende Stabilitätsprobleme hervorruft.

Die nachfolgend beschriebene Vorrichtung zur Lagestabilisierung geht zunächst davon aus, daß sich die bekannten Regelungskonzepte, die auf der Verwendung von Pseudorate- bzw. PWPF-Modulatoren zur Erzeugung der Steuerimpulse basieren, vereinheitlichen lassen, so daß sich eine Unterscheidung der Ausführungsformen nach verschiedenartigen Modulationsverfahren erübrigt.

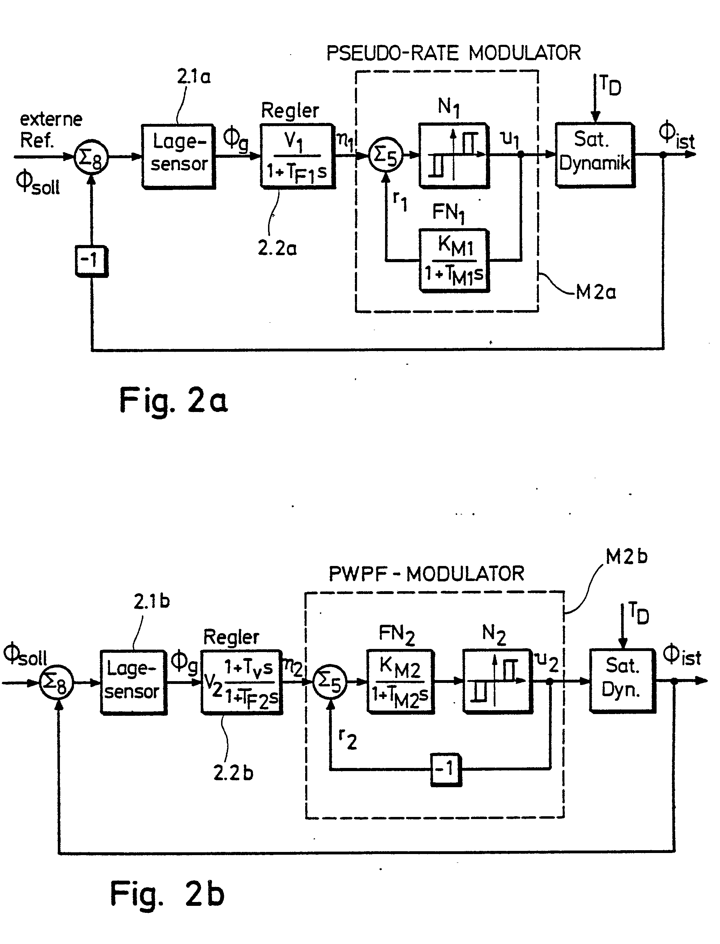

Fig. 2a zeigt einen typischen Pseudo-rate-Regelkreis und Fig. 2b einen Regelkreis mit PWPF-Modulator herkömmlicher Bauart für die Regelung des Raumfahrzeugs um eine rotatorische Achse, deren Drehbewegung hier mit $\emptyset$ bezeichnet ist und stellvertretend für die Roll-Nick- oder Gierachse steht. Die Winkelabweichung bezüglich einer externen (Erde, Sonne, Stern) oder internen (Kreisel-)Referenz wird durch einen Lagesensor 2.1a, 2.1b erfaßt, dessen Meßsignal $\emptyset_9$ einem Reglernetzwerk 2.2a, 2.2b zugeführt wird, das im Falle der Fig. 2a aus einer Verstärkung $V_1$ und einem Verzögerungsglied mit einer Zeitkonstanten $T_F$, und im Falle der Fig. 2b aus einer Verstärkung $V_2$ und einem Vorhaltglied mit Vorhalt $T_V$ und Verzögerungszeitkonstante $T_F$ besteht. Die durch den Regler 2.2a, 2.2b erzeugten Stellsignale $\eta_1$, $\eta_2$ werden auf die Eingänge von Modulatoren Pseudo-rate M2a bzw. PWPF M2b geführt, die aus den kontinuierlichen Eingangssignalen $\eta_1$, $\eta_2$ pulsförmige Ausgangssignale $U_1$, $U_2$ erzeugen. Die Modulatoren M2a, M2b enthalten jeweils ein Hysteresisglied $N_1$, $N_2$ mit typischer Relaischarakteristik, eine interne Rückführung $r_1$, $r_2$ und ein Modulatorennetzwerk $FN_1$, $FN_2$, bestehend aus Verstärkung $K_{M1}$, $K_{M2}$ und einem Verzögerungsglied mit Zeitkonstante $T_{M1}$, $T_{M2}$, das beim Pseudo-rate-Modulator im Rückführzweig, beim PWPF-Modulator dagegen im Vorwärtszweig des Modulators liegt. Die pulsförmigen Modulator-Ausgangssignale $U_1$, $U_2$ betätigen, d. h. öffnen und schließen die Ventile von Reaktionsdüsen, deren Schubmomente die dynamische Bewegung des Fahrzeugs so beeinflussen, daß Istlage $\emptyset_i$ und Sollage $\emptyset_s$ übereinstimmen, soweit äußere Störmomente $T_D$ und erreichbare Regelungsgenauigkeit dies zulassen.

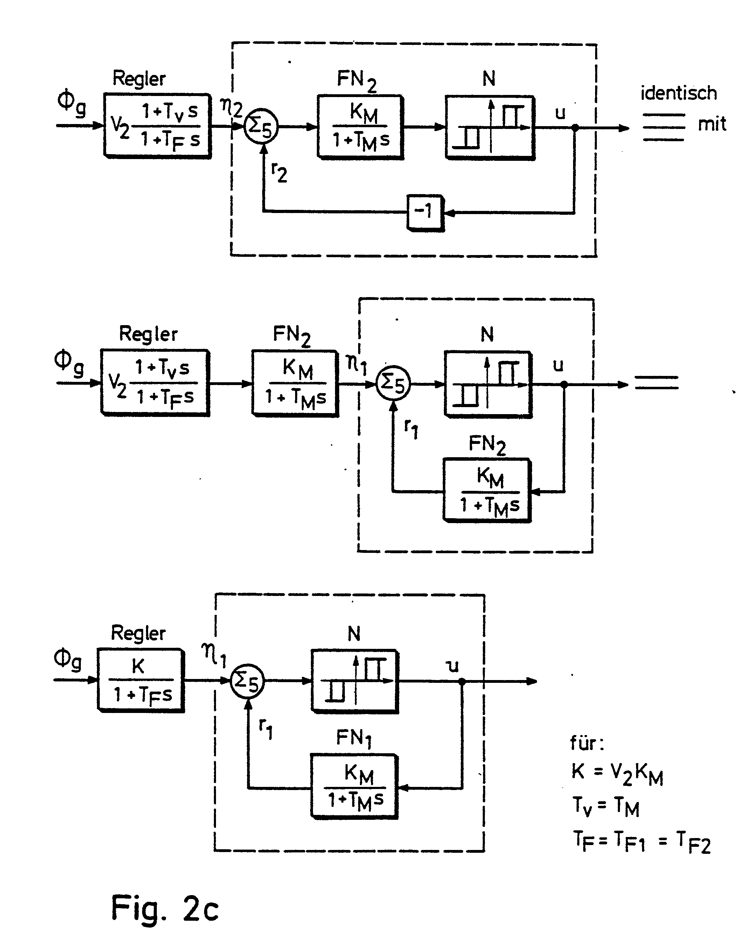

In Fig. 2c ist nun gezeigt, wie sich diese beiden Regelkreise auf Fig. 2a, 2b, die in der Literatur bislang immer völlig getrennt behandelt wurden, ineinander überführen lassen. Verschiebt man nämlich das Modulatornetzwerk FN2 im PWPF-Modulatorkreis M2b nach Fig. 2b über die Summierstelle am Modulatoreingang nach vorn, was einer einfachen und zulässigen linearen Umformung entspricht, so tritt zur Sicherstellung der gleichen Signalverhältnisse am Eingang des Hysteresisgliedes N das Modulatornetzwerk FN2 sowohl hinter dem Regler, als auch im Rückführzweig des Modulators auf. Faßt man nun Reglerübertragungsfunktion und Modulatornetzwerk zusammen und wählt: $V_2K_{M2} = V_1$, $T_v = T_{M2} = T_{M1}$, $K_{M2} = K_{M1}$ und $T_{F2} = T_{F1}$, so lassen sich Zählerterm des Vorhaltgliedes und Vorzögerungsglied des Modulatornetzwerkes gegeneinander kürzen und man erhält genau den Pseudo-rate-Regelkreis nach Fig. 2a.

Der Regelkreis mit Pseudo-rate-Modulator und einfachem Verzögerungsglied zur Rauschunterdrückung als Reglernetzwerk ist demnach ein Spezialfall des Regelkreises mit Vorhaltglied und PWPF-Modulator für gleiche Werte der Vorhalt- und Modulatorzeitkonstanten ($T_v = T_{M2}$).

Aus diesen Überlegungen folgt gleichzeitig, daß der Regelkreis nach Fig. 2b einen Einstellfreiheitsgrad mehr aufweist als der Pseudo-rate-Regelkreis nach Fig. 2a, nämlich die Vorhaltzeitkonstante $T_v$.

Die nachfolgenden Beschreibungen von Ausführungsformen der Erfindung gelten daher für beide Typen von Regelkreisen und/oder Modulationsverfahren, auch wenn dies im Einzelfall nicht besonders vermerkt wird, da bei Kenntnis der vorstehend beschriebenen Zusammenhänge die mit der Änderung der Modulatorstruktur PWPF auf Pseudo-rate und umgekehrt verbundenen linearen Umformungen jedem Fachmann geläufig sind und keinerlei Schwierigkeiten bereiten. Es ist weiturhin jedem Fachmann bekannt, daß die Äquivalenz von Regelkreisstrukturen nicht gewahrt bleibt, wenn lineare Elemente wie Übertragungsfunktionen, Summierstellen, Verzweigungspunkte und dergleichen über ein nichtlineares Glied wie beispielsweise das Hysteresisglied N in Fig. 2a und 2b hinweg verschoben werden, da in diesem Fall das Superpositions-(Überlagerungs-)prinzip für die Signale nicht mehr gilt und damit völlig andersartige, nicht ohne weiteres überschaubare Verhältnisse auftreten. Wesentliche Bestandteile der Erfindung basieren aber gerade auf solchen Maßnahmen.

Die Überlegungen, die zur vorliegenden Erfindung geführt haben, können am anschaulichsten erläutert werden, wenn man zunächst von dem an sich bekannten Prinzip eines sogenannten Beobachters ausgeht, mit dessen Hilfe Schätzwerte der Zustandsgrößen des zu regelnden Systems erzeugt werden zur Gewinnung von Rückführsignalen für die Regelung aus einem elektrischen Modell der Regelstrecke.

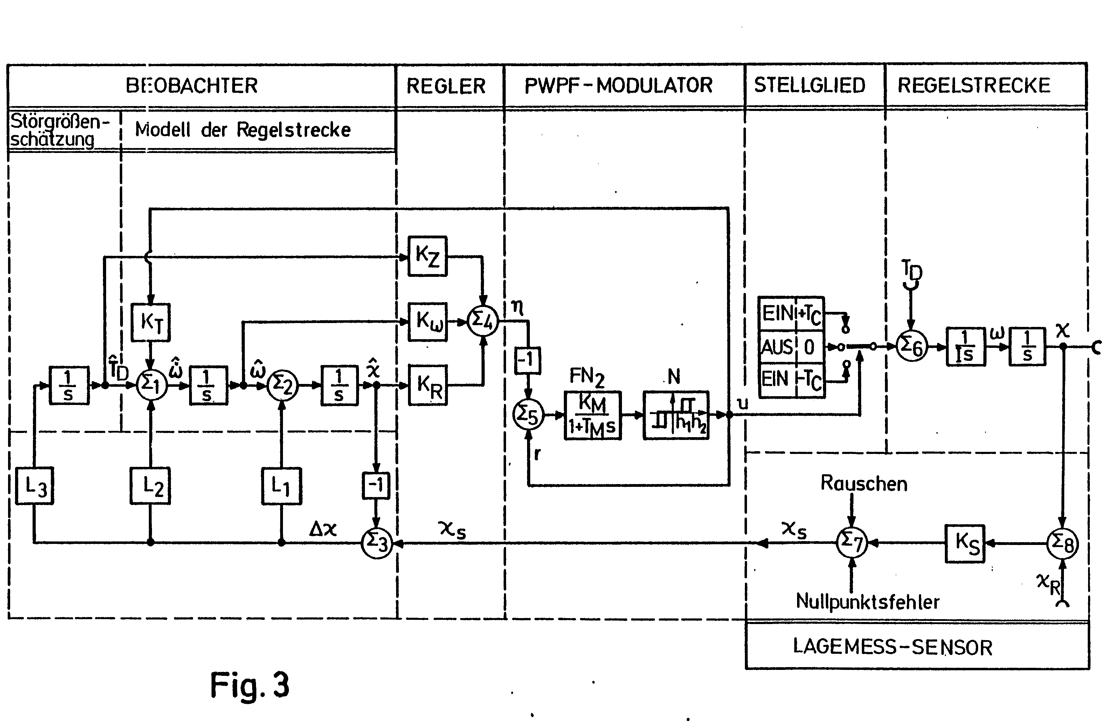

Die Beobachtertheorie wurde in den Jahren 1960/61 von Kalman und Bucy aufgestellt und ist in den beiden grundlegenden Veröffentlichungen Transactions of the ASME; Journal of Basic Engeneering März 1960, Seiten 35 bis 45 und März 1961, Seiten 95 bis 108 sowie vielen nachfolgenden Arbeiten und Lehrbüchern beschrieben. Eine Anwendung dieser Prinzipien für die Regelung eines Raumfahrzeugs starrer, d. h. nicht flexibler Struktur findet sich z. B. in den Preprints des 8. IFAC Symposiums über Automatic Control in Space, 2.-6. Juli 1979, Oxford, England Seiten 147 bis 157 (S.J. Dodds: An Adaptive, High Precision, Gas Jet Satellite Attitude Control System for Microprocessor Implementation). Die Konfiguration eines Regelsystems zur Stabilisierung der Drehbewegungen eines starren Satelliten um eine Hauptträgheitsachse in einer davon etwas abweichenden Form, wobei die Abweichung im wesentlichen in der Verwendung eines herkömmlichen PWPF-Modulators statt eines Rechnerprogramms zur Erzeugung der Ansteuersignale für die Reaktionsdüsen besteht, ist in Fig. 3 gezeigt und soll zur Verdeutlichung der später zu beschreibenden Ausführungsformen der vorliegenden Erfindung kurz erläutert werden :

Der Regelkreis besteht (in Fig. 3 von rechts nach links) aus der Regelstrecke, dem Stellglied, einem PWPF-Modulator zu dessen Ansteuerung, dem Regler und einem Beobachter sowie einem Meßglied zur Feststellung der Regelabweichung. Die rotatorische Bewegung eines starren Körpers wird durch ein dynamisches Modell bestehend aus zwei hintereinander geschalteten Integratoren beschrieben, die in Fig. 3 durch ihre Übertragungsfunktionen 1/s mit dem Laplace-Operators dargestellt sind. Ein entsprechendes elektrisches Modell der Regelstrecke zur Bildung von Schätzwerten $\hat{\omega}$, $\hat{\chi}$ der Drehgeschwindigkeit $\omega$ und des Drehwinkels $\chi$ ist im Beobachter enthalten. Die Differenz $\Sigma_3$ zwischen geschätzter $\hat{\chi}$ und gemessener Winkellage $\chi_s$ wird dazu benutzt, das Beobachtermodell der Regelstrecke zu korrigieren, d. h., dem zu regelnden System nachzuführen. Die Aufschaltfaktoren $L_1$, $L_2$ zur Korrektur der Schätzwerte werden in bekannter Weise nach den Regeln der Beobachtertheorie optimal gewählt im Sinne kleinster quadratischer Abweichungen der geschätzten von den tatsächlichen Zustandsgrößen und bestmöglicher Unterdrückung des Sensorrauschens. Dem Eingang des Streckenmodells im Beobachter werden neben dem vorgenannten Korrektursignal außerdem über den Aufschaltfaktor $K_t$ die impulsförmigen elektrischen Ansteuersignale für die Reaktionsdüsen vom Ausgang des PWPF-Modulators zugeführt, die ein möglichst wirklichkeitsgetreues Abbild der Stellsignale für die Regelstrecke darstellen und bewirken, daß sich die Signale im Beobachter $\hat{\omega}$, $\hat{\chi}$ zu jedem Zeitpunkt wie die tatsächlichen Zustandsgrößen $\omega$, $\chi$ verhalten.

Der Beobachter nach Fig. 3 ist gegenüber der tatsächlichen Regelstrecke noch um eine Ordnung, d. h. einen zusätzlichen Integrator 1/s erweitert, der dazu dient, einen Schätzwert $\hat{T}_D$ für das unbekannte, als konstant angenommene Störmoment $T_D$ zu erzeugen, das von außen auf die Regelstrecke einwirkt. Die im erweiterten Beobachter gewonnenen Schätzwerte $\hat{\omega}$, $\hat{\chi}$, $\hat{T}_D$ für die Zustandsgrößen $\omega$, $\chi$ und die auf das zu regelnde System einwirkenden Störungen $T_D$ werden im Regler mit geeigneten Verstärkungsfaktoren $K_R$, $K_w$, $K_z$ zu einer Stellgröße $\eta$ zusammengefaßt und mit umgekehrtem Vorzeichen dem Eingang des Modulators zugeführt, der aus dem kontinuierlichen Eingangssignal $\eta$ je nach dessen Vorzeichen positive oder negative Stellimpulse u zur Ansteuerung der Düsenventile erzeugt. Im Rythmus dieser Impulse werden die Reaktionsdüsen ein- und ausgeschaltet und damit pulsförmige Stellmomente $T_c$ entsprechenden Vorzeichens erzeugt, die dem Fahrzeug (Regelstrecke) Drehbeschleunigungen erteilen und seine Lagestabilisierung bewirken.

Die in Fig. 3 vorgenommene Aufspaltung der regelungstechnischen Maßnahmen zur Stabilisierung in Beobachter und Regler entspricht den Prinzipien der modernen Regelungstheorie, wobei der Beobachter Schätzwerte $\hat{\omega}$, $\hat{\chi}$, $\hat{T}_D$ direkt entweder überhaupt nicht oder nur mit zusätzlichem Aufwand an Geräten wie z. B. Geschwindigkeitskreiseln meßbarer Grössen $\omega$ erzeugt und der Regler einen sogenannten Zustandsregler darstellt, weil er Linearkombinationen der das zu regelnde System charakterisierenden Zustandsgrößen $\omega$, $\chi$, $T_D$ bildet. Beide Teile müssen jedoch zur Erfüllung der gestellten Regelungsaufgabe gerätetechnisch realisiert werden und sind daher als Gesamtheit zu sehen, wenn man etwa Vergleiche mit den Reglernetzwerken der klassischen Konzepte von Fig. 2a und 2b anstellt.

Wie bereits oben erwähnt, sind die Konzepte nach den Fig. 2 und Fig. 3 ungeeignet zur Lagestabilisierung von elastischen Fahrzeugen, die aufgrund ihrer leichten, gewichtssparenden Bauweise und/oder großen räumlichen Ausdehnung schwach gedämpfte Strukturbiege- und Torsionsschwingungen aufweisen, da diese Schwingungen leicht angeregt werden können, insbesondere wenn die Stelleingriffe nicht sanft und kontinuierlich, sondern — wie in den obigen Beispielensprung — oder pulsförmig, also diskontinuierlich erfolgen.

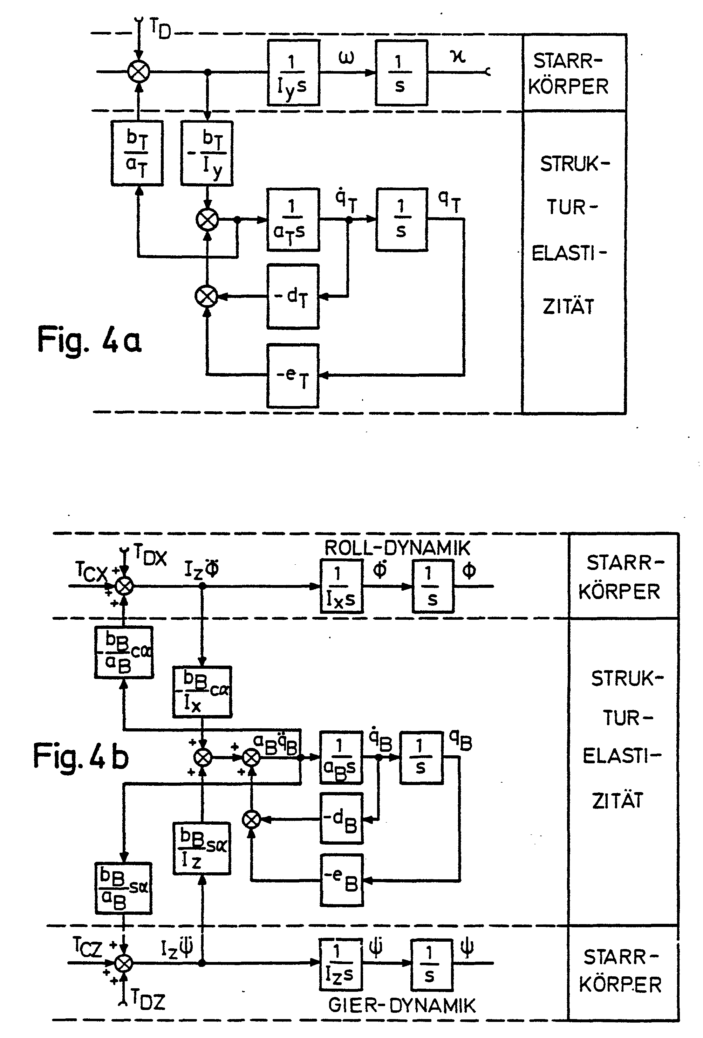

Das dynamische Modell eines elastischen Fahrzeuges für einen Bewegungsfreiheitsgrad bestehend aus Starrkörperdynamik und Strukturelastizität ist in Fig. 4a dargestellt. Die Starrkörperdynamik ist identisch mit der in Fig. 3 gezeigten Regelstrecke. Momente, die auf den Starrkörper einwirken, beeinflussen über Koppelkoeffizienten $b_T$ auch die elastische Strukturschwingungsform $q_T$, die durch eine generalisierte Masse $a_T$ der schwingungsfähigen Strukturteile, eine generalisierte Steifigkeit $e_T$ und die Struktureigendämpfung $d_T$ beschrieben wird und wieder auf den Starrkörper zurückwirkt. Dieselbe Modellstruktur gilt auch für translatorische Bewegungsformen, wenn man sich Momente durch Kräfte und rotatorische durch translatorische Bewegungsgrößen ersetzt denkt.

In Fig. 4a ist zwar der Einfachheit halber nur eine einzige Eigenschwingungsform dargestellt, in Wirklichkeit treten jedoch im allgemeinen deren mehrere gleichzeitig auf mit voneinander abweichenden Parametern und zugehörigen Resonanzfrequenzen.

Als weiteres Beispiel ist in Fig. 4b das dynamische Modell für die Roll/Gierbewegung eines Raumfahrzeugs mit elastischen Solargeneratoren gezeigt. Hier ist wiederum aus Gründen der Vereinfachung nur ein einziges Elastizitätsmodell gezeigt, das stellvertretend für mehrere dazu parallel geschaltet zu denkende Schwingungsformen steht und von den Bewegungen in beiden Achsen angeregt wird und auf diese auch zurückwirkt. Diese Wechselwirkung hängt darüber hinaus noch vom Drehwinkel

α der Solargeneratoren im Raumfahrzeug ab und ändert sich periodisch mit jedem Umlauf des Raumfahrzeugs um die Erde, da die Solargeneratoren immer auf die Sonne ausgerichtet sein müssen und damit raumfest stehen bleiben, die Antennen aber immer auf die Erde ausgerichtet sind und das Raumfahrzeug sich damit bei jedem Umlauf einmal um seine Hochachse (Nickachse) drehen muß.

Die Verhältnisse werden noch zusätzlich dadurch erschwert, daß neben den in Fig. 4b angedeuteten Schwingungsformen für Normalbiegung (Index B) gleichzeitig in räumlich dazu senkrechter Richtung im Raumfahrzeug mehrere sogenannte « Inplane »-Biegeschwingungsformen auftreten, die sich bei gleicher Modellstruktur nur in der Ankopplung an die Starrkörperbewegungen unterscheiden und natürlich andere Resonanzfrequenzen aufweisen.

Um den anhand der Fign. 4a, 4b beschriebenen Verhältnissen bei der Auslegung von Regelsystemen für elastische Fahrzeuge Rechnung zu tragen, denken wir uns nun das einfache Starrkörper-Modell der Regelstrecke in Fig. 3 durch das entsprechende dynamische Modell nach Fig. 4a ersetzt und zusätzlich ergänzt durch weitere Eigenschwingungsformen $q_i$ mit entsprechenden modalen Parametern $a_i$, $b_i$, $d_i$; $e_i$ ; $i = 1, 2, 3...$

Um den andersartigen dynamischen Verhalten des zu regelnden Systems Rechnung zu tragen, schreibt nun die Beobachtertheorie vor, daß auch das Streckenmodell im Beobachter entsprechend erweitert und damit den tatsächlichen Verhältnissen angepaßt werden muß, damit der Beobachter brauchbare Schätzwerte für die Zustandsgrößen liefern kann.

Daher ist mit entsprechend ausgebildeten, herkömmlichen Regelungssystemen die Aufgabe, die Starrkörperbewegungen zu regeln und die Strukturschwingungen zu dämpfen, zwar prinzipiell lösbar, jedoch erfordern die Maßnahmen zur Erweiterung der Modelle im Beobachterteil der Reglerelektronik einen erheblichen Mehraufwand. Vor allem aber sind die Vorhersagen der zu erwartenden elastischen Eigenschwingungen, die auf strukturdynamischen Berechnungen beruhen, mit erheblichen Unsicherheiten behaftet, was die Funktionsfähigkeit darauf basierender Beobachter und Reglerkonzepte praktisch zunichte macht. Strukturschwingungsmodelle stellen nämlich nahezu ungedämpfte Schwingkreise dar, die naturgemäß extreme Verstärkungsüberhöhungen bei der Resonanzfrequenz aufweisen und damit gegen Abweichungen der sie beschreibenden Parameter äußerst empfindlich sind. Bei typischen Unsicherheiten von ± 20 % in der Vorhersage der Eigenfrequenzen und Dämpfungsmaßen von d = 0,005 solcher Strukturschwingungen sind entsprechende Beobachtermodelle und sie beinhaltende Regelsysteme in der Praxis nicht brauchbar.

Hier setzt nun die Erfindung ein, deren nachfolgend beschriebene Regelsysteme zur Stabilisierung elastischer Fahrzeuge den gestellten Anforderungen an hohe Regelgenauigkeit gerecht werden, geringstmöglichen Realisierungs aufwand erfordern, sich durch große Unempfindlichkeit gegen Änderungen der systemspezifischen Parameter, insbesondere der Elastizitätsparameter, auszeichnen, hohe Wirtschaftlichkeit im Verbrauch von Stellenergie aufweisen und die dynamischen Probleme elastischer Fahrzeuge insbesondere bei Verwendung diskontinuierlich arbeitender Stellglieder beherrschen.

Wie bereits erwähnt, soll zum besseren Verständnis der Erfindung bei der nachfolgenden Beschreibung verschiedener Ausführungsformen jeweils auf das bekannte Prinzip eines Zustandsreglers mit Beobachter und PWPF-Modulator nach Fig. 3 Bezug genommen werden, obwohl sich, wie später gezeigt werden wird, die erfindungsgemäßen Regelsysteme in äquivalente Übertragungsfunktionen umrechnen lassen, aus denen die Beobachter/Zustandsreglerstruktur nicht mehr ohne weiteres ersichtlich ist. Die Funktionsfähigkeit der verschiedenen Reglerkonzepte und ihre Wirksamkeit wurde durch Simulationen mit Hilfe elektronischer Rechenanlagen überprüft.

Eine erste und einfachste Ausführungsform eines Regelkreises nach der Erfindung ist in Fig. 5a gezeigt. Er besteht aus einem Beobachter 100 minimaler (d. h. zweiter) Ordnung, der lediglich ein modell der Starrkörperdynamik ohne Strukturelastizität und Störgrößenschätzung darstellt, einem Regler 101 mit den Aufschaltfaktoren $K\omega$, $K_R$ für die geschätzte Winkelgeschwindigkeit $\hat{\omega}$ und Winkellage $\hat{\chi}$ und dem nichtlinearen Element des Modulators 102 (Relaischarakteristik N) in der im Blockschaltbild nach Fig. 5a gezeigten Signalverknüpfung. Im Vergleich zum Modulator nach Fig. 3 fehlen Modulatornetzwerk FN2 und interne Rückführung in Fig. 5a, da in dieser Anordnung der Rückführkreis der Ausgangsgröße u des Hysteresisgliedes N über den Rückführfaktor $K_T$, den ersten Integrator 1/s im Beobachter 100 und den Aufschaltfaktor $K\omega$ die Funktion dieser beiden Modulatorelemente mit übernimmt. Trotz der vorgenommenen Vereinfachungen, d. h. des Verzichtes auf Modulatornetzwerk, interne Modulatorrückführung und Nachbildung der Strukturelastizität im Beobachter, ist dieser Regler geeignet, die gestellten Anforderungen zu erfüllen. Es zeigt sich nämlich, daß die Relaischarakteristik in Verbindung mit der oben genannten Ersatzrückführung sich wie ein Pseudo-rate-Modulator verhält mit einem Rückführnetzwerk höherer als erster Ordnung (nämlich erster Ordnung im Zähler und zweiter Ordnung im Nenner statt nullter Ordnung im Zähler und erster im Nenner wie FN1 in Fig. 2a) und damit bei niedrigen Frequenzen wie etwa den Starrkörperbewegungen anderes dynamisches Verhalten zeigt als bei den hohen Frequenzen der Strukturschwingungen. Dieser Umstand ermöglicht bei geeigneter Wahl der Einstellparameter ($K_T$, $K_R$, $K\omega$, $L_1$, $L_2$) die gleichzeitige Beherrschung aller auftretenden Schwingungsformen bei geringstmöglichem Realisierungsaufwand und großer Unempfindlichkeit gegen Änderungen der Systemparameter. Zur Beschreibung des Regelkreises nach Fig. 5a sei noch ergänzend bemerkt, daß Stellglied, Lagemeßglied und Regelstrecke mit den jeweiligen Teilen der Fig. 3 bzw. 4a übereinstimmen und deshalb auf die dort gegebenen Erläuterungen verwiesen werden kann.

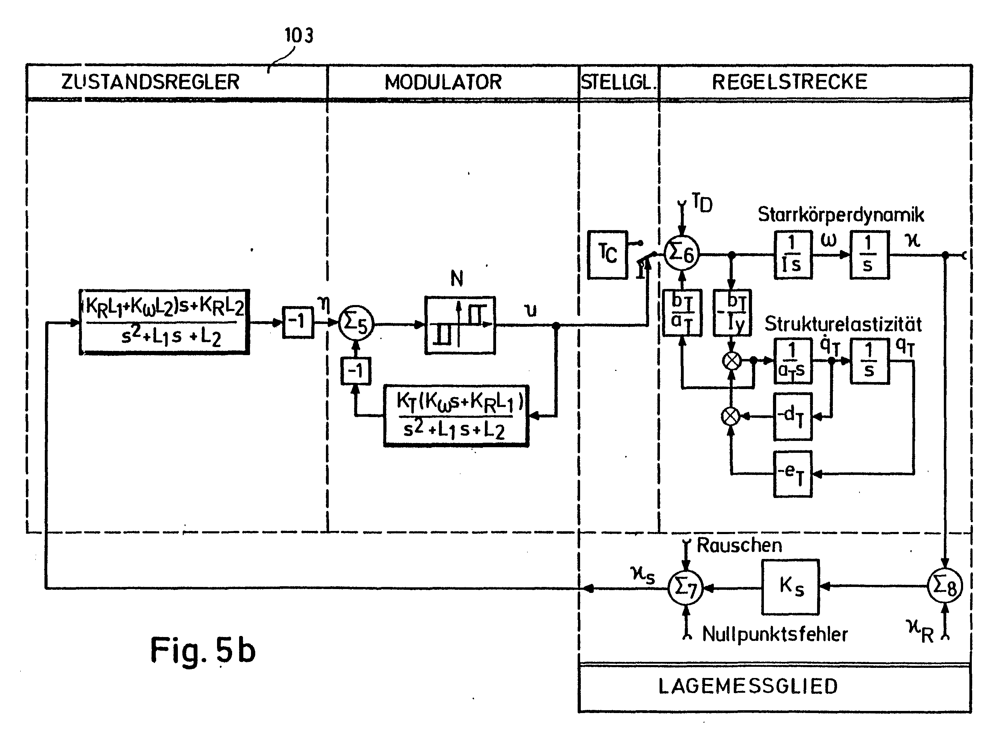

Wie bereits erwähnt, können die linearen Bestandteile von Beobachter/Zustandsreglerstrukturen durch einfache Umformungen in völlig äquivalente Übertragungsfunktionen umgerechnet werden, die dann durch entsprechende elektrische Netzwerke 103 realisiert werden können. Für den Regler und Beobachter nach Fig. 5a als Beispiel wurde eine solche Umrechnung vorgenommen und unter Angabe der sich daraus ergebenden Übertragungsfunktionen der entsprechende Regelkreis im Funktionsschaltbild nach Fig. 5b dargestellt. Wie man aus Fig. 5b ersieht, erhält man für das äquivalente Reglernetzwerk und die Modulatorrückführung eine Übertragungsfunktion vom gleichen Typ, nämlich erster Ordnung im Zähler und zweiter Ordnung im Nenner. Die Bezeichnungen für Parameter und Koeffizienten nach Fig. 5a wurde aus Gründen der Veranschaulichung in den Übertragungsfunktionen nach Fig. 5b beibehalten, obwohl mn im Anwendungsfall für die Produkte und/oder Summen der Parameter neue Größen einführen wird. Für die schaltungstechnische Realisierung der Schaltkreiselemente wie Verstärkungen, Integrationen, Summierglieder, Relaischarakteristik und Übertragungsfunktionen nach Fig. 5a und 5b z. B. als elektrische Netzwerke mit Operationsverstärkern sei auf einschlägige Fachbücher verwiesen wie etwa J.G. Truxal « Control Engineers Handbook », McGraw Hill, 1958.

Sind im speziellen Anwendungsfall die auf das System einwirkenden Störmomente sehr hoch und die Anforderungen an die Ausrichtgenauigkeit sehr groß, dann müssen zur Einhaltung der Genauigkeitsanforderungen im Regler nach Fig. 5a der Aufschaltfaktor $K_R$ für die Winkellage $\hat{\chi}$ und zur Beibehaltung einer vorgegebenen Dämpfung der dynamischen Bewegungen auch der Aufschaltfaktor $K\omega$ für die Geschwindigkeit $\hat{\omega}$ entsprechend angehoben werden. Treten die der Auslegung der Regelkreise, d. h. der Wahl der Reglerparameter $K_R$, $K\omega$ zugrunde gelegten maximalen Störmomente im tatsächlichen Betrieb des Systems gar nicht auf — was z. B. vor Beginn und nach Beendigung der eingangs erwähnten Bahnkorrekturmanöver von geostationären Raumfahrzeugen zutrifft — oder sind die Störmomente wesentlich geringer als erwartet, dann können wegen der hohen Regelkreisverstärkung unerwünschte Betätigungen der Reaktionsdüsen durch die Spitzen des den Nutzsignalen überlagerten Meßrauschens ausgelöst werden.

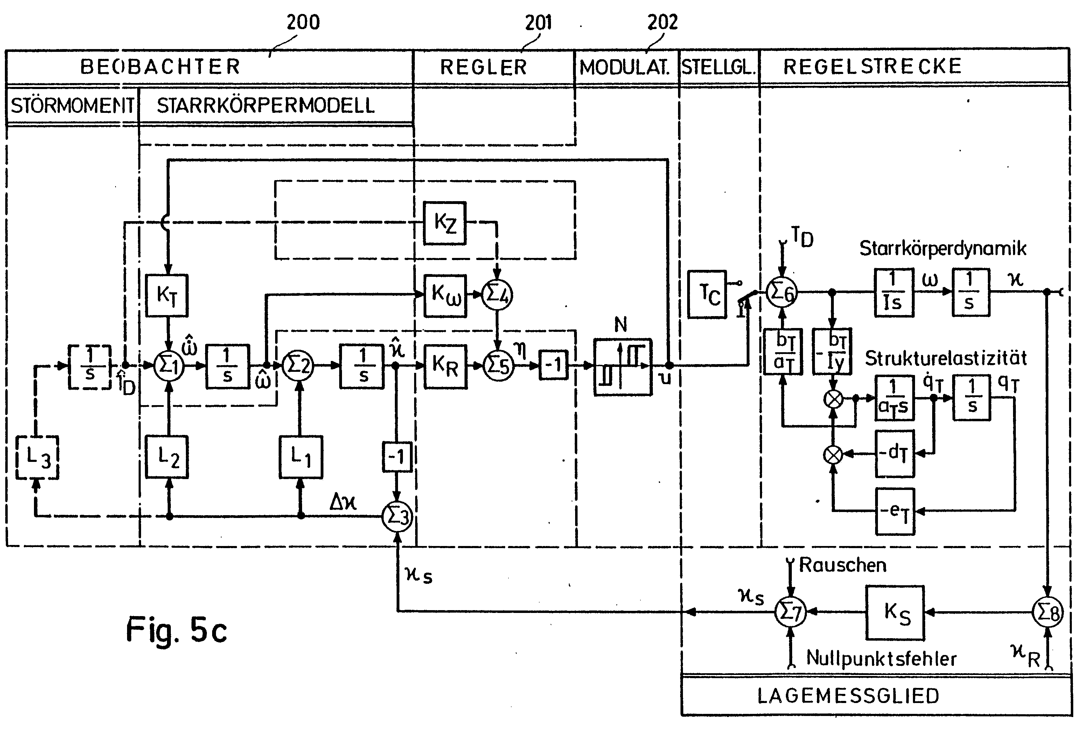

Gemäß einer weiteren Ausgestaltung der Erfindung empfiehlt es sich in solchen Fällen Beobachter und Regler nach Fig. 5a zu erweitern, d. h. in an sich bekannter Weise zusätzlich eine Störgrößenschätzung und — kompensation einzuführen. In Fig. 5c ist der erweiterte Regelkreis dargestellt. Die gegenüber dem Regelkreis nach Fig. 5a vorgenommene Erweiterung des Beobachters 200 um einen Integrator 1/s und die Rückführung des Schätzfehlers $\Delta\chi = \chi_s - \hat{\chi}$ über einen Verstärkungsfaktor $L_3$ sowie die Erweiterung des Reglers 201 um einen Störgrößenaufschaltfaktor $K_z$ wurde bereits im Zusammenhang mit der Beschreibung der Fig. 3 diskutiert. Die Störgrößenkompensation bewirkt, daß im stationären, d. h. eingeschwungenen Zustand des Regelkreises von geringfügigen dynamischen Schwankungen abgesehen im Mittel keine bleibenden Regelabweichungen auftreten, so daß die Reglerverstärkungsfaktoren $K_R$, $K\omega$ verkleinert werden können und damit die Rauschempfindlichkeit verringert wird. Es zeigt sich, daß abgesehen von einem etwas langsameren Einschwingverhalten ein solcher Regler durch diese Zusatzmaßnahmen nicht anderweitig nachteilig beeinflußt wird. Auch für den erweiterten Beobachter/Zustandsregler ist natürlich eine Umrechnung der Netzwerkstruktur in äquivalente Übertragungsfunktionen entsprechend dem Übergang von Fig. 5a auf Fig. 5b möglich und dem Fachmann gleichermaßen geläufig.

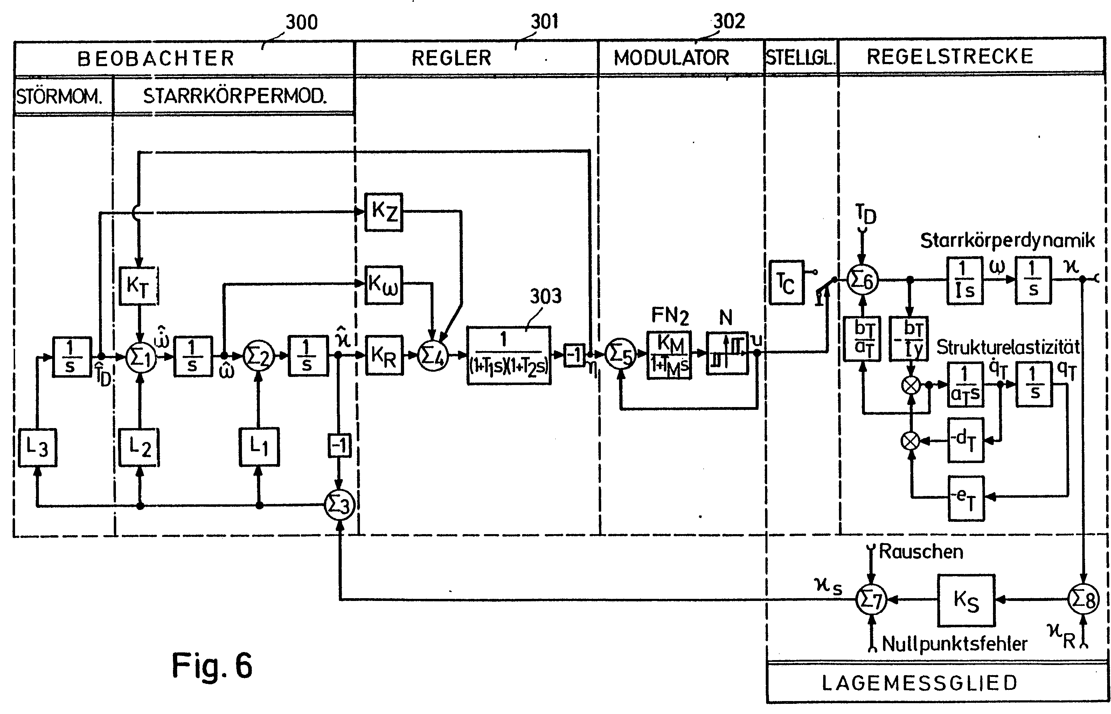

Die Lösung der eingangs gestellten Regelungsaufgabe kann auch noch in anderer Weise bewerkstelligt werden als vorstehend anhand der Fig. 5a bis 5c beschrieben. Diese Möglichkeit soll nachfolgend im Zusammenhang mit Fig. 6 erläutert werden. Ausgangspunkt hierfür ist die Konfiguration des Starrkörper-Regelsystems mit Beobachter, Zustandsregler und PWPF-Modulator nach Fig. 3, in der die Regelstrecke durch eine solche mit strukturelastischen Eigenschaften nach Fig. 4a ersetzt wird.

Wie bereits erwähnt, ist ein solcher Regelkreis ohne wesentliche Änderungen zur Beherrschung der Strukturschwingungsprobleme bei gleichzeitiger Erfüllung der anderen gestellten Anforderungen an sich nicht geeignet.

Demgegenüber ist in Fig. 6 ein Regelkreis gezeigt, der die gestellten Anforderungen erfüllt. Die hierzu erforderlichen Maßnahmen bestehen darin, daß im Vergleich zum Regelkreis nach Fig. 3 an Stelle des pulsförmigen elektrischen Ansteuersignals u für die reaktionsdüsen am Modulatorausgang das Signal am Modulatoreingang η über den Aufschaltfaktor $K_T$ in den Beobachter 300 zurückgeführt wird und der Zustandsregler 301 um eine Zusatzfilteranordnung 303 aus mindestens zwei weiteren Filtern erster Ordnung oder einem Filter mindestens zweiter Ordnung erweitert wird, das zwischen der Summierstelle der Regleraufschaltsignale $\Sigma_4$ und dem Modulatoreingang $\Sigma_5$ liegt. Die erste dieser Maßnahmen stellt eine Verschiebung eines Signalabgriffspunktes über den hochgradig nichtlinearen Modulatorkreis mit der nichtlinearen Relaischarakteristik N hinweg dar und ändert damit das Verhalten des Regelkreises in zunächst unvorhersehbarer Weise. Es zeigt sich jedoch, daß dadurch die Freiheit bei der Auswahl der Regler- und Beobachterparameter beträchtlich vergrößert und der Rauschpegel der Signale im Beobachter wesentlich verringert wird.

Die zweite Maßnahme ermöglicht eine Trennung und individuelle Beeinflußung der Starrkörper- und Strukturschwingungsformen. Die Knickpunktsfrequenzen dieser Zusatzfilter ($\omega_1 = 1/T_1$ und $\omega_2 = 1/T_2$) werden insbesondere so gewählt, daß sie zwischen der Eigenfrequenz der Starrkörperbewegung und der niedrigsten Eigenfrequenz der elastischen Strukturschwingungen liegen. Da ein Beobachter, üblicherweise als « Kalman-Filter » bezeichnet, bereits ein Optimalfilter im Sinne bestimmter Optimie-

7

rungskriterien darstellt, ist die Verwendung zusätzlicher Filter im zugehörigen Zustandsregler durchaus unüblich und widerspricht der herkömmlichen Optimalfiltertheorie, ist jedoch im vorliegenden Fall besonders wirksam. Die übrigen Elemente des Regelkreises nach Fig. 6 wie Regelstrecke, Lagemeßglied, PWPF-Modulator, Struktur des Beobachters und Zusammenfassung der geschätzten zustandsgrößen im Regler wurden bereits im Zusammenhang mit den jeweiligen Blockschaltbildern gemäß den Fign. 3 bzw. 4a beschrieben und bedürfen keiner weiteren Erläuterungen. Bei einer eventuellen Umrechnung der Beobachter/Zustandsreglerstruktur in äquivalente Übertragungsfunktionen kann im vorliegenden Fall in einfacher Weise auch das Modulatornetzwerk mit einbezogen und damit, wie anhand der Fig. 2 gezeigt, vom PWPF-Modulator auf einen Pseudo-rate-Modulator übergegangen werden.

Die bisher beschriebenen Ausführungsformen der vorliegenden Erfindung sind gleichermaßen geeignet die gestellte Regelungsaufgabe zu erfüllen, d. h. hohe Regelgenauigkeit auch bei hohen äußeren Störmomenten, Stabilität der Strukturschwingungen trotz Unsicherheiten in den Elastizitätsparametern und diskontinuierlichen Stelleingriffen bei zugleich geringstmöglichem Realisierungsaufwand und Verbrauch an Stellenergie sicherzustellen.

Gemäß einer weiteren Ausgestaltung ist es nun möglich, die im jeweiligen Anwendungsfall auftretenden stabilen Schwingungsamplituden der elastischen Strukturteile und damit die dynamischen Strukturbelastungen weiter zu verringern. Die Strukturbelastung nimmt nämlich zu, wenn die Stellimpulse bei steigenden Störkräften und/oder Momenten zur Erhaltung des Gleichgewichtszustandes immer länger werden müssen, oder infolge der starken Resonanzüberhöhung der strukturelastischen Schwingungen, wenn bei den bereits erwähnten « kritischen Störmomenten » die Folgefrequenz der Stellimpulse mit einer Resonanzfrequenz zusammenfällt.

Zur Verringerung der Strukturbelastungen insbesondere bei kritischen Störmomenten werden daher die in den Beobachtern nach Fig. 5c oder Fig. 6 ermittelten Schätzwerte des tatsächlich auftretenden Störmomentes $T_D$ zur Verhinderung einer Resonanzerregung benutzt. Dies kann z. B. dadurch geschehen, daß durch einen adaptiven, automatischen Eingriff in den Modulator mit zunehmender Größe des Störmomentensignals die Breite der Hysteresecharakteristik vergrößert und damit die Dauer der Einzelimpulse erhöht wird. Aus der Gleichgewichtsbedingung für den Regelkreis folgt dann, daß die Folgefrequenz der Stellimpulse abnimmt. Die schaltungstechnische Realisierung dieser Maßnahme soll später noch näher erläutert werden. Hierdurch wird gleichzeitig erreicht, daß die maximale Schaltzahl der Stelleingriffe begrenzt wird, was die Zuverlässigkeit der Stellglieder über die geforderte Lebensdauer günstig beeinflußt. Wählt man insbesondere die Parameter dieser adaptiven Impulsbreitensteuerung so, daß die maximalen Pulsfolgefrequenzen immer unterhalb der untersten Strukturresonanzfrequenz liegen, dann kann eine Resonanzerregung nicht erfolgen. Allerdings können durch die großen Stellimpulse, die bei hohen Störmomentenniveaus in speziellen Anwendungsfällen dann eventuell unvermeidbar sind, immer noch unerwünscht hohe Strukturschwingungsamplituden auftreten. Um auch solchen Verhältnissen gerecht zu werden, ist gemäß einer weiteren Maßnahme vorgesehen, die im speziellen Fall im System tatsächlich auftretenden Strukturschwingungsamplituden zur Änderung der Pulsfolgefrequenz der Stelleingriffe heranzuziehen, sobald diese Amplituden ein vorgegebenes zulässiges Maß überschreiten. Ein Signal, das ein Maß für die Struktur-Schwingungsamplituden darstellt und zu dieser Regelkreisadaption herangezogen werden kann, läßt sich, wie später noch ausführlicher gezeigt werden wird, in einfacher Weise aus dem Ausgangssignal des Lagemeßsensors gewinnen, da die Strukturschwingungen auf den Zentralkörper zurückwirken und entsprechende Schwankungen der Ablage hervorrufen.

Da nach den vorstehenden Ausführungen zu große Stellimpulse ebenfalls zur Strukturanregung beitragen können, empfiehlt es sich jedoch in diesem Fall, die Hysteresisbreite des Modulators im Sinne einer Verkleinerung zu beeinflussen, d. h. die Pulsfolgefrequenz zu erhöhen und damit und über die Strukturresonanzstelle hinweg zu höheren Frequenzen zu verschieben.

Besondere Vorteile ergeben sich aus einer Kombination beider oben genannter Maßnahmen dann, wenn durch entsprechende Wahl der Parameter der beiden adaptiven Eingriffe das geschätzte Störmoment $\hat{T}_D$ zur Begrenzung der maximalen Stellglied-Schaltzahlen herangezogen wird und die gemessenen Strukturschwingungsamplituden zur Verhinderung von Resonanzanregungen eingesetzt werden.

Die bisher beschriebenen Maßnahmen haben sich ausschließlich mit den Betriebsbedingungen solcher Regelungssysteme im stationären, d. h. eingeschwungenen Zustand befaßt. Nun treten aber bei Übergängen aus anderen Betriebsphasen oder bei Beginn und am Ende von kommandierten, Lageänderungen, die z. B. mit einem sprungförmigen Anstieg von Störkräften und Momenten verbunden sind, schnelle Änderungen der Betriebsbedingungen auf, die in bekannter Weise zu einem Überschwingen des Regelsystems vor Erreichen der neuen Sollposition oder der Ruhelage führen. Während solcher Transitionsphasen können je nach Härte der Übergangsbedingungen die spezifizierten Genauigkeitsanforderungen, die während des stationären Betriebes ohne weiteres einhaltbar sind, kurzzeitig verletzt werden.

Auch für solche Fälle werden nachfolgend Maßnahmen aufgezeigt, die ein Überschwingen zwar nicht völlig verhindern, die auftretenden Regelfehler jedoch auf die zulässigen Abweichungen des Systems von der Sollage zu reduzieren vermögen.

Zur Beherrschung der Probleme bei dynamischen Übergängen, insbesondere zur Verringerung der Ablagen während der Transitionsperiode werden drei verschiedene Maßnahmen beschrieben, die je nach Anwendungsfall entweder einzeln oder kombiniert eingesetzt werden sollen :

Erstens wird das Ablagesignal aus dem Lagemeßsensor dazu benutzt, einen zusätzlichen Eingriff in die Relaischarakteristik des Modulators derart vorzunehmen, daß der Nullpunkt der nichtlinearen Hysteresekennlinie gegensinnig (d. h. in umgekehrter Richtung) und proportional zur Größe der gemessenen Ablage verschoben wird. Diese Maßnahme bewirkt, daß sofort länger anhaltende Stellimpulse ausgelöst werden, die der sich aufbauenden Ablage entgegenwirken. Auf die schaltungstechnische Realisierung wird später noch näher eingegangen.

Zweitens werden geeignete Schätzwerte von Zustandsgrössen im Beobachter, wie beispielsweise das Störmoment $\hat{T}_D$ aus den stationären Bedingungen gleichartiger vorhergehender Regelvorgänge festgehalten und dazu benutzt, im Wiederholungsfall Anfangsbedingungen der Integratoren so einzustellen, daß das den Beobachter bildende elektrische Netzwerk keine Einschwingphase durchläuft, sondern die Signalverhältnisse sofort die stationären Betriebsbedingungen erfüllen.

Drittens wird — ebenfalls aud der Erfahrung eines gleichartigen vorhergehenden Regelvorgangs — ein Ablagekommando geeigneter Größe und entgegengesetzten Vorzeichens zur erwarteten Auslenkung aufgeschaltet, das während der erfahrungsgemäßen Dauer des Einschwingungsvorganges linear auf den Wert Null zurückgenommen wird. Alternativ kann auch dem für die Ablageschätzung verantwortlichen Integrator im Beobachter der volle oder ein entsprechender Bruchteil z. B. die Hälfte der erwarteten Ablage während der Einschwingphase als Anfangsbedingung aufgegeben werden. Durch diese Maßnahmen wird das Überschwingen, das sonst nur in Richtung der Störung verläuft, symmetrisch um die Ablage Null verteilt und seine Amplitude halbiert.

Nachfolgend soll nun näher auf die schaltungstechnische Realisierung der vorstehend beschriebenen Maßnahmen eingegangen werden, mit Ausnahme der beiden betztgenannten, für deren Durchführung lediglich entsprechende Kommandos an das Regelsystem gegeben werden müssen.

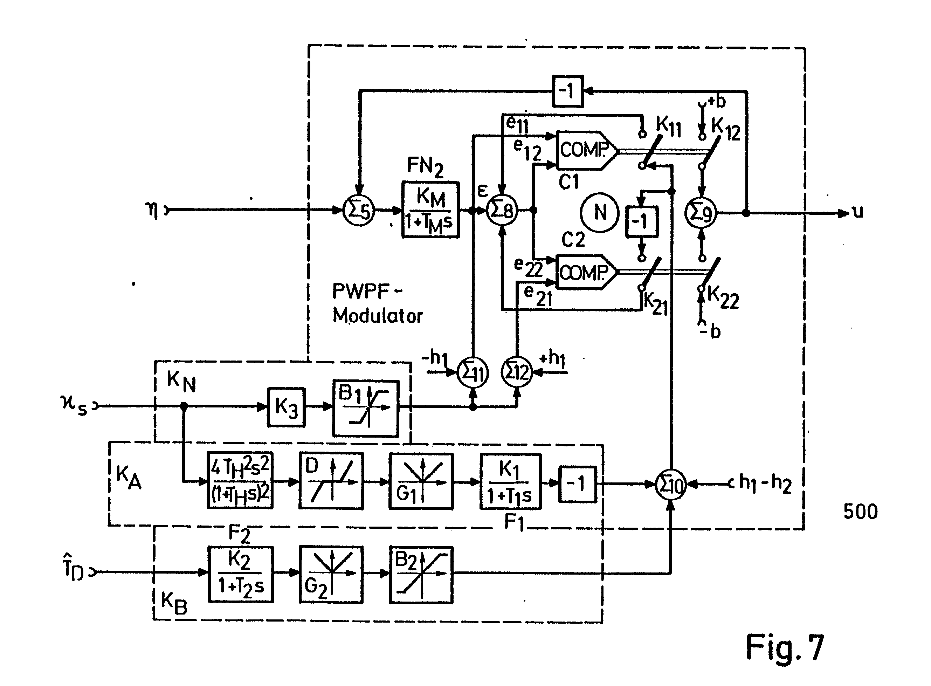

Fig. 7 zeigt ein Funktionsschaltbild eines adaptiven PWPF-Modulators der genannten Art. Im oberen Teil ist der normale, nicht adaptive PWPF-Modulator, bestehend aus dem Modulatornetzwerk FN2, der nichtlinearen Relaischarakteristik N und der negativen Rückführung des Ausgangssignals u auf die Summierstelle $\Sigma_5$ am Eingang $\eta$ dargestellt. Zur Realisierung der Hysteresecharakteristik N dienen im wesentlichen zwei Komparatoren $C_1$, $C_2$, von denen der obere $C_1$ die daran angeschlossenen Kontakte $K_{11}$, $K_{12}$ dann schließt, wenn die Summe der beiden Eingänge von $C_1$ positiv wird, und der untere $C_2$ die daran aufgeschlossenen Kontakte $K_{21}$, $K_{22}$ schließt, wenn die Summe seiner Eingänge negativ wird. An jeweils einem der beiden Komparatoreingänge $e_{11}$, $e_{21}$ liegt ein fester Wert an, nämlich die Hysteresenansprechschwelle $- h_1$ an $C_1$ und $+ h_1$ an $C_2$. Der jeweils andere Eingang $e_{12}$, $e_{22}$ wird über das Eingangssignal $\eta$ und die Hysteresisbreite $h_1 - h_2$ gesteuert. Ist das Eingangssignal $\eta$ z. B. positiv, so läuft der gesteuerte Eingang $e_{12}$ des oberen Komparators $C_1$ mit der Verzögerung des Modulatornetzwerkes FN2 hoch, bis der Betrag des Schwellwertes $- h_1$ erreicht wird und der Komparator $C_1$ anspricht. Durch das damit verbundene Schließen des einen Kontaktes $K_{11}$ wird ein Signal, das der Hysteresisbreite $h_1 - h_2$ entspricht, über ein Summierglied $\Sigma_8$ auf den gesteuerten Komparatoreingang $e_{12}$ zurückgeführt. Mit dem zweiten Kontakt $K_{12}$ wird gleichzeitig das Impulssignal b über das Summierglied $\Sigma_9$ auf den Ausgang u gelegt und über die negative Rückführung im Summierglied $\Sigma_5$ vom Eingangssignal $\eta$ abgezogen. Die (negative) Differenz $\eta - b$ führt über das Modulatornetzwerk FN2 und das Summierglied $\Sigma_8$ zu einer verzögerten Abnahme des gesteuerten Einganges $e_{12}$ des Komparators $C_1$. Der Komparator $C_1$ fällt wieder ab und öffnet damit wieder die angeschlossenen Kontakte $K_{11}$, $K_{12}$, wenn die Summe seiner Eingänge $- h_1 + h_1 - h_2 + \varepsilon$ den Wert Null erreicht. Das ist dann der Fall, wenn das Ausgangssignal $\varepsilon$ des Modulatornetzwerkes FN2 die Abfallschwelle $\varepsilon = h_2$ erreicht. Gleichzeitig fällt das Modulatorausgangssignal u auf Null zurück und beendet damit den Stelleingriff. Der Vorgang wiederholt sich regelmäßig, wenn das Eingangssignal $\eta$ positiv bleibt, wobei ein konstantes Eingangssignal $\eta$ eine Folge von pulsen konstanter Breite und Frequenz hervorruft. Entsprechendes gilt bei negativen Eingangssignalen mit Hilfe des anderen Komparators $C_2$ und den zugehörigen Kontakten $K_{21}$, $K_{22}$. Die Zusatzschaltungen zur Realisierung der in ihrer Auswirkung bereits beschriebenen adaptiven Maßnahmen sind in Fig. 7 unten in drei parallelen Zweigen $K_N$, $K_A$, $K_B$ schematisch dargestellt. Aus der Funktionsweise des PWPF-Modulators wird ersichtlich, daß die gewünschten Effekte in einfacher Weise durch zweckentsprechendes Verschieben der Ansprech- und Abfallschwellen $h_1$, $h_2$ erzielt werden können.

Zur Verringerung der Amplitude des überschwingens mit Hilfe des Ablagesignals $\chi_s$ dient der erste Zweig $K_N$. Über einen Verstärkungsfaktor $K_3$ und eine Begrenzung $B_1$ wird das Ausgangssignal des Meßgliedes in Summiergliedern $\Sigma_{11}$, $\Sigma_{12}$ zu den nominalen Werten der Ansprechschwellen $+ h_1$, $- h_1$ addiert. Ein positives Fehlersignal $\chi_s$ verkleinert die Ansprechschwelle $- h_1$ für den positiven Stelleingriff, der damit früher als normal erfolgt. Da die Hysteresisbreite $h_1 - h_2$ dadurch nicht beeinflußt wird, verschiebt sich auch die Abfallschwelle $- h_2$ um den gleichen Betrag, was einer Nullpunktverschiebung der gesamten nichtlinearen Relaiskennlinie entspricht.

Im mittleren Zweig $K_A$ der Fig. 7 wird gezeigt, wie Resonanzerregungen der elastischen Schwingungen mit Hilfe gemessener Strukturschwingungsamplituden vermieden werden können. Die hochfrequenten Schwingungen werden in diesem Fall aus dem Ablagesignal durch einen Hochpaß H ausgefiltert, die der Strukturbelastung zumutbaren Amplituden, bei deren Auftreten noch kein Eingriff erfolgen soll, werden durch eine tote Zone D festgelegt, und unzulässige Überschreitungen werden in $G_1$

gleichgerichtet, in $F_1$ geglättet und im Summierglied $\Sigma_{10}$ der nominalen Hysteresisbreite $h_1 - h_2$ mit umgekehrtem Vorzeichen überlagert. Zu hohe Strukturschwingungsamplituden führen damit zur Verringerung der Hysteresisbreite $h_1 - h_2$ und folglich zu kürzeren Stellimpulsen und höheren Folgefrequenzen der Stelleingriffe. Die Strukturschwingungsamplituden können natürlich auch mit Hilfe anderer Meßgeber ermittelt werden wie beispielsweise Geschwindigkeits- und Beschleunigungsmessern, die entweder in der Geräteausrüstung des Systems für andere Zwecke bereits vorhanden sind oder zusätzlich und ausschließlich dafür an geeigneten Stellen eingebaut werden können.

Im letzten Zweig $K_B$ der Fig. 7 wird die schaltungstechnische Realisierung der Impulsbreitenverstellung über das geschätzte Störmoment $\hat{T}_D$ gezeigt. Das Störmomentsignal $\hat{T}_D$ wird im Tiefpaß $F_2$ geglättet und über eine Betragsbildungsschaltung $G_2$ und eine Begrenzung $B_2$ ohne Vorzeichenumkehr der nominalen Hysteresisbreite $h_1 - h_2$ in $\Sigma_{10}$ überlagert. Zunehmende Störmomente $\hat{T}_D$ bewirken damit eine Verbreiterung der Hysterese $h_1 - h_2$, längere Stellimpulse und höhere Folgefrequenzen.

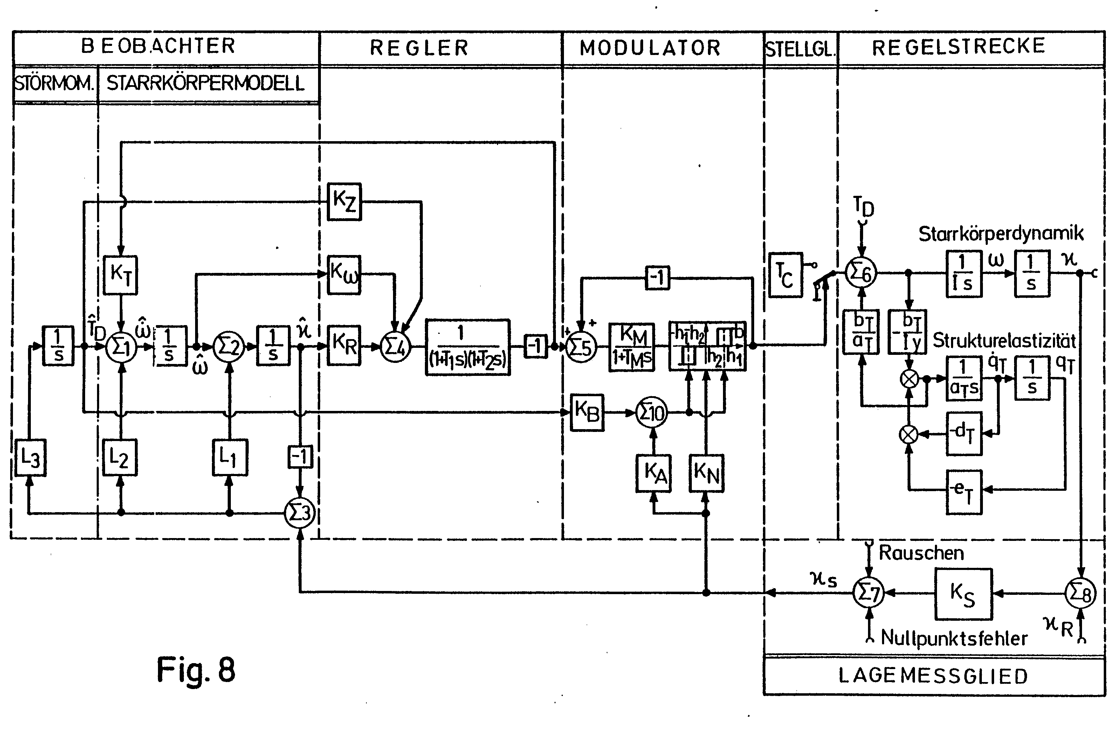

In Fig. 8 ist der Regelkreis nach Fig. 6 mit allen Zusatzmaßnahmen in schematischer Darstellung zur Verdeutlichung der Signalverknüpfungen noch einmal gezeigt. Die vorstehend im Detail beschriebenen und in Fig. 8 dargestellten adaptiven Zusatzmaßnahmen können natürlich auch einzeln oder in ihrer Gesamtheit sinngemäß im Regelkreis nach Fig. 5c angewandt werden und zeigen auch dort ihre vorteilhafte Wirkung. Ihre Notwendigkeit, einzeln oder beliebig kombiniert, hängt von den im speziellen Anwendungsfall gegebenen Verhältnissen ab.

Bei der bisherigen Beschreibung wurde ausschließlich die Darstellung von analogen Schaltkreisen verwendet. Neuerdings wird jedoch im zunehmendem Maße digitale Technologie zur technischen Realisierung eingesetzt. Steht insbesondere ein digitaler Bordrechner zur Verfügung, so wird die Umsetzung in besonderem Maße dadurch erleichtert, daß zur Darstellung vorwiegend die Beobachter/Zustandsreglerstruktur gewählt wurde, deren diskrete Formulierung in den eingangs genannten grundlegenden Arbeiten von Kalman bereits enthalten ist und auch anderweitig in der einschlägigen Literatur ausführlich behandelt wird.

Schwierigkeiten bei der Digitalisierung bereitet lediglich die Nachbildung des PWPF-Modulatorkreises, da wegen der Schnelligkeit der internen Vorgänge sehr hohe Abtastraten bis ca. 1 kHz gewählt werden müssen, um eine dem analogen Kreis entsprechende Funktion sicherzustellen. Trotz der Einfachheit eines solchen Bordrechnerprogramms führen die hohen Abtastraten zur Bindung eines erheblichen Teils der verfügbaren Rechenzeit.

Nachfolgend wird jedoch eine einfache Möglichkeit aufgezeigt, hohe Abtastraten für die digitale Realisierung der Stellimpulserzeugung zu vermeiden und trotzdem ein dem analogen Modulatorkreis äquivalentes dynamisches Verhalten sicherzustellen. Die Häufigkeit der pro Zeiteinheit auszuführenden programmzyklen wird damit nur von der für den gesamten Regelkreis erforderlichen, erheblich niedrigeren Abtastrate bestimmt und richtet sich nach den Frequenzen der auftretenden strukturelastischen Schwingungen.

Der nachfolgend beschriebenen Maßnahme zur digitalen Realisierung der PWPF-Modulators liegt der Gedanke zugrunde, für die Funktion der geschlossenen analogen Modulatorschleife eine analytische Formel zu finden, die mit direkten Rechneroperationen wie Addition, Subtraktion, Multiplikation und Division exakt berechnet werden kann, um auf die digitale Nachbildung der schnellen, internen analogen Vorgänge im Kreis verzichten zu können. Die wesentlichen Größen sind dabei die Pulsbreite, Pulsfrequenz und Zeitpunkt der Auslösung. Das Modulatornetzwerk besteht neben einer Verstärkung aus einem Verzögerungsglied mit großer Zeitkonstante $T_M$, das näherungsweise die Funktion einer exakten Integration ausführen soll, die jedoch im analogen Kreis wegen der Integratordrift nicht realisierbar ist. Gerade für diesen Fall eines idealen Modulatornetzwerkes mit exaktem Integrator lassen sich aber besonders einfache analytische Formeln für die Funktionsgrößen des Modulators finden. Sie lauten für:

die Pulsbreite:

$$w = \frac{h_1 - h_2}{K_M^* \, b} \cdot \frac{1}{\left(1 - \dfrac{\eta}{b}\right)}$$

die Pulsfrequenz:

$$f = \frac{K_M^* \, b}{h_1 - h_2} \cdot \frac{\eta}{b}\left(1 - \frac{\eta}{b}\right) = \frac{1}{T_p}$$

wobei, wie in Übereinstimmung mit den Bezeichnungen von Fig. 8, die Größen

$\eta$ : das Modulator-Eingangssignal
$K_M^*$ : die Verstärkung des Modulator-Integrators
$h_1$ : die Ansprechschwelle
$h_2$ : die Abfallschwelle
$h_1 - h_2$ : die Hysteresisbreite
$b$ : die Impulshöhe
$T_p$ : Pulsperiode bedeuten.

10

Im Digitalrechnerprogramm wird aus der Regler-Ausgangsgröße und den bekannten Parametern $K^*_M$, b, $h_1$, $h_2$ die Pulsbreite w berechnet, was, von Skalierungsfaktoren abgesehen, eine Subtraktion, eine Division, und eine Multiplikation bedeutet. Diese Größe wird nochmals durch die auf die konstante Pulshöhe b normierte Eingangsgröße $\eta$ dividiert und ergibt dann die Pulsperiode, d. h. den zeitlichen Abstand zwischen zwei aufeinanderfolgenden Stellimpulsen. In jedem Abtastintervall werden diese beiden Funktionsgrößen des Modulators berechnet, die Zahl der Abtastperioden, die seit der Abgabe des vorhergehenden Impulses verstrichen sind, von der errechneten Pulsperiode abgezogen, und es wird entschieden, ob ein Impuls abgegeben werden soll. Dies ist dann der Fall, wenn die Differenz zwischen Pulsperiode und Zahl der verstrichenen Abtastperioden kleiner ist als das nächstfolgende Abtastintervall.

Diese Form der digitalen Realisierung des PWPF-Modulators wurde mit Hilfe eines Rechnerprogramms in einem Mikroprozessor in der geschlossenen Simulationsschleife mit analoger Regelstrecke erprobt und hat sich als voll funktionsfähig und gleichwertig zur analogen Realisierung erwiesen.

Im Hinblick auf die anhand der Fig. 2c beschriebene Äquivalenz des PWPF- und Pseudo-rate-modulators ist mit dem vorstehend erläuterten Realisierungsverfahren gleichzeitig auch die digitale Realisierung des Pseudo-rate-Modulators abgedeckt.

**Patentansprüche**

1. Vorrichtung zur Lagestabilisierung eines elastichen Fahrzeugs, wie Luft- oder Raumfahrzeugs, bezüglich mindestens einer Fahrzeugachse, mit einem mit einem Lagemeßsignal beaufschlagten beobachter (100, 200), dem jeweils nacheinander ein Zustandsregler (101, 201), ein ein Hystereseglied (N) mit Relaischarakteristik enthaltender Modulator (102, 202) und eine diskontinuierlich arbeitende, die für die Stabilisierung erforderlichen Kräfte bzw. Momente auf das Fahrzeug ausübende Stellgliedanordnung nachgeschaltet sind, wobei das Fahrzeug strukturell schwach gedämpfte Biege- und/oder Torsionsschwingungen bezüglich der zu stabilisierenden Fahrzeugachse aufweist, dadurch gekennzeichnet, daß zur gemeinsamen Stabilisierung von Lage und Schwingung pro zu stabilisierender Achse ein einziger Beobachter (100, 200) höchstens dritter Ordnung vorgesehen ist, und daß der Eingang des Hysteresegliedes (N) einzig und allein an den Ausgang des Zustandsreglers (101, 201) angeschlossen ist, während das Ausgangssignal des Hysteresegliedes (N) über eine äußere Rückführung zum Beobachter (100, 200) zurückgeführt ist (Fign. 5a, 5b und 5c).

2. Vorrichtung zur Lagestabilisierung eines elastischen Fahrzeugs, wie Luft- oder Raumfahrzeugs, bezüglich mindestens einer Fahrzeugachse, mit einem mit einem Lagemeßsignal beaufschlagten Beobachter (300), dem jeweils nacheinander ein Zustandsregler (301), ein ein Hystereseglied (N) mit Relaischarakteristik enthaltender Modulator (302) und eine diskontinuierlich arbeitende, die für die Stabilisierung erforderlichen Kräfte bzw. Momente auf das Fahrzeug ausübende Stellgliedanordnung nachgeschaltet sind, wobei das Fahrzeug strukturell schwach gedämpfte Biege- und/oder Torsionsschwingungen bezüglich der zu stabilisierenden Fahrzeugachse aufweist und dem Hystereseglied (N) ein Modulatornetzwerk (FN2, FN1) zugeordnet ist und das Ausgangssignal des Hysteresegliedes (N) über eine interne Rückführung auf den Eingang des Modulators (302) zurückgeführt ist, dadurch gekennzeichnet, daß zur gemeinsamen Stabilisierung von Lage und Schwingung pro zu stabilisierender Achse ein einziger Beobachter (300) höchstens dritter Ordnung vorgesehen ist, daß das Ausgangssignal des Zustandsreglers (301) dem das Hystereseglied (N) enthaltenden Modulator (302) über eine Tiefpaßfilteranordnung als Eingangssignal zugeführt ist, daß dieses Eingangssignal über eine äußere Rückführung zum Beobachter (300) zurückgeführt wird, und daß die Tiefpaßfilteranordnung aus mindestens zwei Tiefpaßfiltern erster Ordnung oder einem Tiefpaßfilter (303) mindestens zweiter Ordnung besteht, deren Knickpunktfrequenzen derart gewählt sind, daß sie zwischen der Eigenfrequenz der Lagestabilisierung und der Eigenfrequenz der Schwingungsstabilisierung für die zu stabilisierende Fahrzeugachse liegen (Fign. 6 und 8).

3. Vorrichtung nach Anspruch 1 oder 2, dadurch gekennzeichnet, daß anstelle des Beobachters und Zustandsreglers bzw. des um die Tiefpaßfilteranordnung erweiterten Zustandsreglers deren lineare Übertragungsfunktionen darstellende, elektrische Netzwerke (103) vorgesehen sind.

4. Vorrichtung nach einem der vorhergehenden Ansprüche, dadurch gekennzeichnet, daß pro Fahrzeugachse ein Beobachter zweiter Ordnung und ein Zustandsregler ohne Störgrößenaufschaltung vorgesehen sind.

5. Vorrichtung nach einem der Ansprüche 1 bis 3, dadurch gekennzeichnet, daß zur Verhinderung der Erregung von Strukturresonanzen die Hysteresisbreite des Hysteresegliedes (N) des Modulators (102, 302) in Abhängigkeit von dem im Beobachter (100, 300) gebildeten Schätzwert der Störgröße ($\hat{T}_D$) derart adaptiv veränderbar ist, daß die Folgefrequenz der Stelleingriffe unterhalb eines vorgegebenen, einer Strukturresonanzfrequenz in der zu stabilisierenden Fahrzeugachse entsprechenden Wertes bleibt (Fign. 7 und 8).

6. Vorrichtung nach einem der Ansprüche 1 bis 5, dadurch gekennzeichnet, daß zur Verringerung des Überschwingens das Ablagesignal des Lagemeßsensors zusätzlich dazu benutzbar ist, den Nullpunkt der Relaischarakteristik im Modulator (102, 302) in adapter Weise gegensinnig so zu verschieben, daß eine zunehmende Ablage abnehmende Werte der Modulator-Ansprechschwelle hervorruft.

7. Vorrichtung nach einem der Ansprüche 1 bis 6, dadurch gekennzeichnet, daß entweder aus dem Ausgangssignal des Lagemeßgliedes oder mit Hilfe einer zusätzlichen Meßeinrichtung ein Signal für die Größe der Strukturschwingungsamplituden gebildet wird und daß dieses Signal bei Überschreiten eines vorgegebenen Schwellwertes dazu benutzt wird, die Hysteresisbreite der Relaischarakteristik im Modulator in adaptiver Weise so zu verändern, daß die Folgefrequenz der Stelleingriffe nicht mit der einer Strukturresonanzfrequenz zusammenfällt.

8. Vorrichtung nach einem der Ansprüche 1 bis 3 oder 5 bis 7, dadurch gekennzeichnet, daß zur Verringerung des Überschwingens der für die Störgrössenschätzung ($\hat{T}_D$) verantwortliche Integrator im Beobachter auf einen Anfangswert gesetzt wird, der dem Schätzwert der Störgröße entspricht, die im stationären Betriebszustand des Systems in einem gleichartigen, vorhergehenden Regelvorgang aufgetreten ist.

9. Vorrichtung nach einem der Ansprüche 1 bis 8, dadurch gekennzeichnet, daß zur Verringerung des Überschwingens der für die Schätzung der Ablage ($\kappa$) verantwortliche Integrator im Beobachter auf einen Anfangswert gesetzt wird, der einem Bruchteil, vorzugsweise der Hälfte der Überschwing-Amplitude aus einem gleichartigen vorhergehenden Regelvorgang entspricht.

10. Vorrichtung nach einem der Ansprüche 1 bis 8, dadurch gekennzeichnet, daß vor Beginn eines Übergangsvorganges ein Ablagekommando entgegengesetzten Vorzeichens zur erwarteten Ablage gegeben wird, dessen Wert am Anfang etwa der Hälfte der im gleichartigen vorhergehenden Übergangsvorgang aufgetretenen maximalen Auslenkung von der Nullage entspricht und während der Einschwingperiode allmählich auf Null verringert wird.

11. Vorrichtung nach Anspruch 1 bis 9, dadurch gekennzeichnet, daß Beobachter, Regler, Modulator, adaptive Zusatzmaßnahmen und Anfangsbedingungen durch funktionsmäßig entsprechende Programmteile und/oder Befehle in einem digitalen Bordrechner realisiert werden.

12. Vorrichtung nach Anspruch 10, dadurch gekennzeichnet, daß die Funktion des aus Modulatornetzwerk, Hystereseglied und Rückführung bestehenden geschlossenen Modulator-kreises durch die Berechnung äquivalenter analytischer Formeln für die Pulsweite, Pulsperiode und den Zeitpunkt der Pulsauslösung nachgebildet wird.

13. Vorrichtung nach einem oder mehreren der vorhergehenden Ansprüche, dadurch gekennzeichnet, daß ein adaptiver PWPF-Modulator (500) vorgesehen ist, der aus einem nicht-adaptiven PWPF)Modulatorteil und mindestens einem Adaptionszweig ($K_N$, $K_A$, $K_B$) zur Einstellung der Relaischarakteristik (N) besteht.

14. Zur Vorrichtung nach Anspruch 13, dadurch gekennzeichnet, daß zur Verringerung der Amplitude des Überschwingens mit Hilfe des Ablagesignals ($\chi_s$) ein erster Zweig ($K_N$) dient, in welchem über einen Verstärkungsfaktor ($K_3$) und eine Begrenzung ($B_1$) das Ausgangssignal des Meßgliedes in Summiergliedern ($\Sigma 11$, $\Sigma 12$) zu den Nominalwerten der Ansprechschwellen ($+ h_1$, $- h_1$) addiert wird, so daß bei positivem Fehlersignal ($\chi_s$) sich die Ansprechschwelle ($- h_1$) für den positiven Stelleingriff verkleinert und eine Nullpunktverschiebung der gesamten nicht-linearen Relaiskennlinie eintritt.

15. Vorrichtung nach Anspruch 13, dadurch gekennzeichnet, daß zur Vermeidung von Resonanzerregungen des elastischen Schwingungen mit Hilfe gemessener Strukturschwingungsamplituden die hochfrequenten Schwingungen aus dem Ablagesignal ($\chi_s$) durch einen Hochpaß (H) ausgefiltert werden, daß die der Strukturbelastung zumutbaren Amplituden, bei deren Auftreten noch kein Eingriff ergfolgen soll, durch eine tote Zone festgelegt werden, daß unzulässige Überschreitungen gleichgerichtet, geglättet und in einem Summierglied ($\Sigma 10$) der nominalen Hysteresisbreite ($h_1 - h_2$) mit umgekehrten Vorzeichen überlagert werden.

16. Vorrichtung nach Anspruch 15, dadurch gekennzeichnet, daß eine Impulsbreitenverstellung über das geschätzte Störmoment ($\hat{T}_D$) vorgenommen wird, wobei das Störmomentsignal ($\hat{T}_D$) in einem Tiefpaß ($F_2$) geglättet und über eine Betragsbildungsschaltung ($G_2$) und eine Begrenzung ($B_2$) ohne Vorzeichenumkehr der nominalen Hysteresisbreite ($h_1 - h_2$) in einem Summierglied ($\Sigma 10$) überlagert wird.

17. Vorrichtung nach einem oder mehreren der vorhergehenden Ansprüche, dadurch gekennzeichnet, daß zur digitalen Realisierung des PWPF-Modulators die Pulsbreite (W) nach folgender Formel bestimmbar ist :

$$w = \frac{h_1 - h_2}{K_M^* \, b} \cdot \frac{1}{\left(1 - \dfrac{\eta}{b}\right)}$$

und daß die Pulsfrequenz (f) nach der Formel bestimmbar ist :

$$f = \frac{K_M^* \, b}{h_1 - h_2} \cdot \frac{\eta}{b}\left(1 - \frac{\eta}{b}\right) = \frac{1}{T_p}$$

wobei die Formelgrößen

$\eta$ : das Modulator-Eingangssignal

$K_M^*$ : die Verstärkung des Modulator-Integrators

$h_1$ : die Ansprechschwelle

$h_2$ : die Abfallschwelle

$h_1 - h_2$ : die Hysteresisbreite

b : die Impulshöhe

$T_P$ : Pulsperiode bedeuten,

und daß in jedem Abtastintervall diese beiden Funktionsgrößen berechnet und die Zahl der Abtastperioden, die seit der Abgabe des vorhergehenden Impulses verstrichen sind, von der errechneten Pulsperiode abgezogen und unterhalb eines vorgegebenen Differenzwertes ein Impuls abgegeben wird.

### Claims

1. A device for stabilising the attitude of an elastic craft, such as an aircraft or spacecraft, relative to at least one axis of the craft, having a monitor (100, 200) which is acted upon by an attitude measuring signal and connected subsequently to which are respectively, in succession, a condition regulator (101, 201), a modulator (102, 202) containing a hysteresis member (N) with relay characteristic, and a discontinuously-operating adjusting-member arrangement which exerts, on the craft, the forces or moments as the case may be, which are necessary for the stabilisation, in which connection the craft has structurally weakly-damped flexural and/or torsional oscillations relative to the craft axis that is to be stabilised, characterised in that, for the joint stabilisation of attitude and oscillation per axis that is to be stabilised, a single monitor (100, 200), at the most of third order, is provided, and in that the input of the hysteresis member (N) is connected simply and solely to the output of the condition regulator (101, 201), whilst the output signal of the hysteresis member (N) is led back by way of an external return to the monitor (100, 200) (Figs. 5a, 5b und 5c).

2. A device for stabilising the attitude of an elastic craft, such as an aircraft or spacecraft, relative to at least one axis of the craft, having a monitor (300) which is acted upon by an attitude measuring signal and connected subsequently to which are respectively, in succession, a condition regulator (301), a modulator (302) containing a hysteresis member (N) with relay characteristic, and a discontinuously-operating adjusting-member arrangement which exerts, on the craft, the forces or moments as the case may be, which are necessary for the stabilisation, in which connection the craft has structurally weakly-damped flexural and/or torsional oscillations relative to the craft axis that is to be stabilised, and a modulator network (FN2, FN1) is associated with the hysteresis member (N) and the output of the hysteresis member (N) is fed back, by way of an internal return, to the input of the modulator (302), characterised in that, for the joint stabilisation of attitude and oscillation per axis that is to be stabilised, a single monitor (300), at the most of third order, is provided, in that the output signal of the condition regulator (301) is fed to the modulator (302), containing the hysteresis member (N), by way of a low-pass filter arrangement as input signal, in that this input signal is fed back by way of an external return to the monitor (300), and in that the low-pass filter arrangement consists of at least two low-pass filters of first order or a low-pass filter (303), at least of second order, the break point frequencies of which are selected in such a way that they lie between the inherent frequency of the attitude stabilisation and the inherent frequency of the oscillation stabilisation for the craft axis that is to be stabilised (Figs. 6 and 8).

3. A device according to claim 1 or 2, characterised in that, instead of the monitor and condition regulator, or respectively the condition regulator expanded by the low-pass filter arrangement, electrical networks (103) which represent the linear transmission functions thereof are provided.

4. A device according to one of the preceding claims, characterised in that, for each craft axis, one monitor of second order and one condition regulator without disturbance-variable feed system are provided.

5. A device according to one of claims 1 to 3, characterised in that, to prevent the stimulation of structural resonance, the hysteresis width of the hysteresis member (N) of the modulator (102, 302) is adaptively variable as a function of the estimated value, formed in the monitor (100, 300), of the disturbance variable $(\hat{T}_D)$ in such a way that the frequency of repetition of the adjusting interventions remains below a preset value corresponding to a structural resonance frequency in the craft axis that is to be stabilised (Figs. 7 and 8).

6. A device according to one of claims 1 to 5, characterised in that, to reduce overshoot, the displacement signal of the attitude measuring sensor is additionally usable to shift the zero point of the relay characteristic in the modulator (102, 302) opposingly in an adaptive manner in such a way that increasing displacement causes decreasing values of the modulator response threshold.

7. A device according to one of claims 1 to 6, characterised in that, either from the output signal of the attitude measuring member or with the aid of an additional measuring device, a signal for the magnitude of the structural oscillation amplitudes is created and in that this signal, upon a preset threshold value being exceeded, is used to vary the hysteresis width of the relay characteristic in the modulator in an adaptive manner such that the recurrence frequency of the adjusting interventions does not coincide with that of a structural resonance frequency.

8. A device according to one of claims 1 to 3 or 5 to 7, characterised in that, to reduce overshoot, the integrator responsible for the disturbance variable estimation ($\hat{T}_D$), in the monitor is set to an initial value which corresponds to the estimated value of the disturbance variable which has occurred in the stationary operating condition of the system in a similar preceding regulating operation.

9. A device according to one of claims 1 to 8, characterised in that, to reduce overshoot, the integrator, responsible for the estimation of the displacement ($\chi$), in the observer is set to an initial value which corresponds to a fraction, preferably to half, of the overshoot amplitude from a similar preceding regulating operation.

10. A device according to one of claims 1 to 8, characterised in that, prior to commencement of a transition procedure, a displacement command of opposite sign to the expected displacement is given out, the value of which initially corresponds approximately to half the maximum deflection from the zero position which has occured in the similar preceding transition procedure, and is gradually reduced to zero during the transient period.

11. A device according to claim 1 to 9, characterised in that the monitor, regulator, modulator, adaptive additional measures and initial conditions are realised by functionally appropriate programme parts and/or commands in a digital onboard computer.

12. A device according to claim 10, characterised in that the function of the closed modulator circuit consisting of modulator network, hysteresis member and return is simulated by the calculation of equivalent analytical formulae for the pulse width, pulse period and the instant of pulse triggering.

13. A device according to one or more of the preceding claims, characterised in that an adaptive PWPF-modulator (500) is provided, which consists of a non-adaptive PWPF)-modulator part and at least one adaptation branch ($K_N$, $K_A$, $K_B$) for adjustment of the relay characteristic (N).

14. A device according to claim 13, characterised in that serving to reduce the amplitude of the overshoot with the aid of the displacement signal ($\chi_s$) is a first branch ($K_N$) in which, by way of an amplification factor ($K_3$) and a limitation ($B_1$), the output signal of the measuring member is added in summating members ($\Sigma 11$, $\Sigma 12$) to the nominal values of the response thresholds ($+ h_1$, $- h_1$), so that, in the case of a positive fault signal ($\chi_s$), the response threshold ($- h_1$) for the positive adjusting intervention is reduced and a zero-point shift of the entire non-linear characteristic curve of the relay occurs.

15. A device according to claim 13, characterized in that, to avoid resonance stimulations of the elastic oscillations, with the aid of measured structural oscillation amplitudes, the high-frequency oscillations are filtered out of the displacement signal ($\chi_s$) by a high-pass filter (H), in that the amplitudes which are imputable to the structural loading, and upon the occurrence of which no intervention is required to be effected, are determined by a dead zone, in that impermissible excesses are rectified, smoothed and superimposed in a summating member ($\Sigma 10$) on the nominal hysteresis width ($h_1 - h_2$) with reversed sign.

16. A device according to claim 15, characterised in that impulse-width adjustment is undertaken by way of the estimated disturbance moment ($\hat{T}_D$), in which respect the disturbance moment signal ($\hat{T}_D$) is smoothed in a lowpass filter ($F_2$) and is superimposed by way of an amount-forming circuit ($G_2$) and a limitation ($B_2$) without sign reversal on the nominal hysteresis width ($h_1 - h_2$) in a summating member ($\Sigma 10$).

17. A device according to one or more of the preceding claims, characterised in that, for digital realisation of the PWPF-modulator, the pulse width (w) is determinable in accordance with the following formula :

$$w = \frac{h_1 - h_2}{K_M^* \, b} \, \frac{1}{\left(1 - \dfrac{\eta}{b}\right)}$$

and in that the pulse frequency (f) is determinable in accordance with the formula :

$$f = \frac{K_M^* \, b}{h_1 - h_2} \cdot \frac{\eta}{b} \left(1 - \frac{\eta}{b}\right) = \frac{1}{T_p}$$

in which the formula variables denote
$\eta$ : the modulator input signal
$K_M^*$ : the amplification of the modulator-integrator
$h_1$ : the response threshold
$h_2$ : the decay threshold
$h_1 - h_2$ : the hysteresis width
$b$ : the impulse height
$T_p$ : pulse period
and in that in each scanning interval these two function variables are calculated and the number of scanning periods which have elapsed since the issuance of the preceding impulses are subtracted from the calculated pulse period and below a preset difference value an impulse is issued.

# 0 046 151

**Revendications**

1. Dispositif pour la stabilisation d'orientation d'un véhicule élastique, tel qu'un aéronef ou spationef, en ce qui concerne au moins un axe du véhicule, comprenant un observateur (100, 200) recevant un signal de mesure d'orientation et en aval duquel sont respectivement montés les uns derrière les autres un régulateur d'état (101, 201) un modulateur (102, 202) contenant un élément à hystérésis (N) à caractéristique relais, et un organe de réglage fonctionnant de façon discontinue et exerçant sur le véhicule les forces et les moments nécessaires à la stabilisation, le véhicule présentant des vibrations de flexion et/ou de torsion structurellement faiblement amorties par rapport à l'axe du véhicule à stabiliser, caractérisé par le fait que pour la stabilisation commune de l'orientation et de la vibration on prévoit un seul observateur (100, 200) tout au plus du troisième ordre par axe à stabiliser et que l'entrée de l'élément à hystérésis (N) est uniquement et seulement raccordée à la sortie du régulateur d'état (101, 201), tandis que le signal de sortie de l'élément à hystérésis (N) est réinjecté par une contre-réaction externe à l'observateur (100, 200) (figures 5a, 5b et 5c).

2. Dispositif pour la stabilisation d'orientation d'un véhicule élastique, tel qu'un aéronef ou spationef, en ce qui concerne au moins un axe du véhicule, comprenant un observateur (300) recevant un signal de mesure d'orientation et en aval duquel sont respectivement montés les uns derrière les autres un régulateur d'état (301), un modulateur (302) contenant un élément à hystérésis (N) à caractéristique relais, et un organe de réglage fonctionnant de façon discontinue et exerçant sur le véhicule les forces et les moments nécessaires à la stabilisation, le véhicule présentant des vibrations de flexion et/ou de torsion structurellement faiblement amortie par rapport à l'axe du véhicule à stabiliser, un réseau modulateur (FN2, FN1) étant associé à l'élément à hystérésis (N) et le signal de sortie de l'organe à hystérésis (N) étant réinjecté à l'entrée du modulateur (302) par une contre-réaction interne, caractérisé par le fait que pour la stabilisation commune de l'orientation et de la vibration, on prévoit un seul observateur (300) tout au plus du troisième ordre par axe à stabiliser, que le signal de sortie du régulateur d'état (301) est appliqué en tant que signal d'entrée par l'intermédiaire d'un dispositif à filtres passe-bas au modulateur (302) contenant l'élément à hystérésis (N), que ce signal est réinjecté à l'observateur (300) par une contre-réaction externe, et que le dispositif à filtres passe-bas se compose d'au moins deux filtres passe-bas de premier ordre ou d'un filtre passe-bas (303) d'au moins du deuxième ordre dont les fréquences des points de brisure sont choisies de manière qu'elles se situent entre la fréquence propre de la stabilisation d'orientation et la fréquence propre de la stabilisation des vibrations pour l'axe du véhicule à stabiliser (figures 6 et 8).

3. Dispositif selon la revendication 1 ou 2, caractérisé par le fait qu'à la place de l'observateur et du régulateur d'état ou du régulateur d'état agrandi du dispositif à filtres passe-bas, on prévoit des réseaux électriques (103) représentant leurs fonctions de transfert linéaires.

4. Dispositif selon l'une des revendications précédentes caractérisé par le fait que par axe du véhicule, on prévoit un observateur de deuxième ordre et un régulateur d'état sans compensation des grandeurs perturbatrices.

5. Dispositif selon l'une des revendications 1 à 3, caractérisé par le fait que pour empêcher l'excitation de résonances structurales, on modifie de façon adaptative la largeur d'hystérésis de l'élément à hystérésis (N) du modulateur (102, 302) en fonction de la valeur estimée, formée dans l'observateur (100, 300), de la grandeur perturbatrice ($\hat{T}_D$) de manière que la fréquence de répétition des interventions de réglage reste en dessous d'une valeur prédéterminée correspondant à une fréquence de résonance structurale dans l'axe du véhicule à stabiliser (figures 7 et 8).

6. Dispositif selon l'une des revendications 1 à 5, caractérisé par le fait que pour réduire les suroscillations, on utilise en plus le signal de dérive du capteur de mesure de l'orientation pour déplacer en sens inverse de façon adaptative le point zéro de la caractéristique relais dans le modulateur (102, 302) de manière qu'une augmentation de la dérive provoque une diminution des valeurs de seuil de réponse du modulateur.

7. Dispositif selon l'une des revendications 1 à 6, caractérisé par le fait qu'à partir du signal de sortie de l'organe de mesure d'orientation ou à l'aide d'un dispositif de mesure supplémentaire, on forme un signal pour la grandeur des amplitudes des vibrations structurales qu'en cas de dépassement d'une valeur de seuil prédéterminée, on utilise ce signal pour modifier de façon adaptative la largeur d'hystérésis de la caractéristique relais dans le modulateur de manière que la fréquence de répétition des interventions de réglage ne coïncide avec celle d'une fréquence de résonance structurale.

8. Dispositif selon l'une des revendications 1 à 3 ou 5 à 7, caractérisé par le fait que pour diminuer les suroscillations, dans l'observateur on met l'intégrateur responsable de l'estimation des grandeurs perturbatrices ($\hat{T}_D$) à une valeur initiale qui correspond à la valeur estimée de la grandeur perturbatrice qui, en régime stationnaire du système est intervenue dans un processus de réglage précédent de même type.

9. Dispositif selon l'une des revendications 1 à 8, caractérisé par le fait que pour réduire les suroscillations, dans l'observateur on met l'intégrateur responsable de l'estimation de la dérive ($\chi$) à une valeur initiale qui correspond à une fraction, de préférence à la moitié, de l'amplitude des suroscillations provenant d'un processus de réglage précédent de même type.

15

10. Dispositif selon l'une des revendications 1 à 8, caractérisé par le fait qu'avant le début d'un processus de transfert, on envoie un ordre de dérive de signe opposé à la dérive escomptée et dont la valeur correspond au début à peu près à la moitié de la déviation maximale par rapport à la position zéro intervenue dans un processus de transfert précédent de même type et qui est progressivement ramené à zéro pendant la période transitoire.

11. Dispositif selon les revendications 1 à 9, caractérisé par le fait que l'observateur, le régulateur, le modulateur, les mesures adaptatives supplémentaires et les conditions initiales sont réalisées dans un calculateur de bord numérique au moyen de parties de programme et/ou d'ordres appropriés au fonctionnement.

12. Dispositif selon la revendication 10, caractérisé par le fait que le fonctionnement du circuit modulateur fermé constitué du réseau modulateur, de l'élément à hystérésis et de la contre-réaction est reproduit par le calcul de formules analytiques équivalents pour la largeur et la période des impulsions et le moment de leur déclenchement.

13. Dispositif selon l'une ou plusieurs des revendications précédentes, caractérisé par le fait qu'on prévoit un modulateur adaptatif PWPF (500) qui se compose d'une partie modulateur non adaptative PWPF et d'au moins une branche d'adaptation ($K_N$, $K_A$, $K_B$) pour le réglage de la caractéristique relais (N).

14. Dispositif selon la revendication 13, caractérisé par le fait que pour diminuer l'amplitude des suroscillations à l'aide du signal de dérive ($\chi_s$), on utilise une première branche ($K_N$) dans laquelle avec un coefficient d'amplification ($K_3$) et une limitation ($B_1$), on additionne le signal de sortie de l'organe de mesure dans des dispositifs sommateurs ($\Sigma 11$, $\Sigma 12$) aux valeurs nominales des seuils de réponse (+ $h_1$, − $h_1$) de manière qu'en cas de signal d'erreur positif ($\chi_s$), le seuil de réponse (− $h_1$) pour l'intervention de réglage positive diminue et qu'il se produise une dérive du zéro de l'ensemble de la ligne caractéristique non linéaire du relais.

15. Dispositif selon la revendication 13, caractérisé par le fait que pour éviter les excitations de résonance des vibrations élastiques à l'aide d'amplitudes de vibrations structurales mesurées, on filtre les vibrations haute fréquence du signal de dérive ($\chi_s$) par un passe-haut (H), que les amplitudes à attendre de la charge structurale et à l'apparition desquelles encore aucune intervention ne doit avoir lieu, sont déterminées par une zone morte, et que des dépassements inadmissibles sont redressés, lissés et superposés avec signe inversé dans un dispositif sommateur ($\Sigma 10$) à la largeur d'hystérésis nominale ($h_1$ − $h_2$).

16. Dispositif selon la revendication 15, caractérisé par le fait qu'un réglage de la largeur des impulsions est effectué en fonction du moment perturbateur estimé ($\hat{T}_D$), le signal du moment perturbateur ($\hat{T}_D$) étant lissé dans un passe-bas (Fe) et, par l'intermédiaire d'un circuit ($G_2$) de formation de valeur absolue et d'une limitation ($B_2$), étant superposée sans changement de signe à la largeur d'hystérésis nominale ($h_1$ − $h_2$) dans un dispositif sommateur ($\Sigma 10$).

17. Dispositif selon l'une ou plusieurs des revendications précédentes, caractérisé par le fait que pour la réalisation numérique du modulateur PWPF, la largeur (w) de l'impulsion peut être déterminée d'après la formule suivante :

$$w = \frac{h_1 - h_2}{K_M^* \, b} \cdot \frac{1}{\left(1 - \dfrac{\eta}{b}\right)}$$

et que la fréquence (f) de l'impulsion peut être déterminée d'après la formule :

$$f = \frac{K_M^* \, b}{h_1 - h_2} \cdot \frac{\eta}{b}\left(1 - \frac{\eta}{b}\right) = \frac{1}{T_p}$$

formules dans lesquelles, on a

$\eta$ : signal d'entrée du modulateur

$K_M^*$ : l'amplification de l'intégrateur-modulateur

$h_1$ : le seuil de réponse

$h_2$ : le seuil de retombée

$h_1$ − $h_2$ : la largeur d'hystérésis

$b$ : la hauteur de l'impulsion

$T_p$ : période de l'impulsion

et que, dans chaque intervalle de balayage, ces deux grandeurs fonctionnelles sont calculées et que le nombre des périodes de balayage qui se sont écoulées depuis la délivrance de l'impulsion précédente, est déduit de la période d'impulsion calculée et qu'en dessous d'une valeur différentielle déterminée une impulsion est délivrée.

FLUGRICHTUNG

ROLL

1.4

1.8

1.3

1.1

+X

1.7

1.6

GIER

1.5

+Z

NICK

+Y

NORD

1.2

ERDE

SÜD

Fig. 1

Fig. 2a

Fig. 2b

2

Fig. 2c

$$K = V_2 K_M$$
$$T_v = T_M$$
$$T_F = T_{F1} = T_{F2}$$

**Fig. 3**

BEOBACHTER — REGLER — PWPF-MODULATOR — STELLGLIED — REGELSTRECKE

Störgrößen-schätzung — Modell der Regelstrecke

LAGEMESS-SENSOR

0 046 151

0 046 151

Fig. 4a

Fig. 4b

5

Fig. 5a

Fig. 5b

0 046 151

Fig. 5c

Fig. 6

Fig. 7

Fig. 8